# EUROPEAN PATENT SPECIFICATION

(11) **EP 2 452 522 B1**
(45) Date of publication and mention of the grant of the patent: **07.11.2018**
(21) Application number: 10796619.4
(22) Date of filing: 06.07.2010
(51) Int. Cl.: H04W 36/08, H04W 52/24, H04W 72/14, H04W 88/02, H04W 88/08, H04W 36/00, H04W 52/40, H04W 52/14

(54) **METHODS AND APPARATUS FOR WIRELESS COMMUNICATION**
VERFAHREN UND VORRICHTUNG FÜR DRAHTLOSE KOMMUNIKATION
PROCÉDÉS ET APPAREILS DE COMMUNICATION SANS FIL

(30) Priority: 06.07.2009 US 806185 P
(43) Date of publication of application: 16.05.2012
(73) Proprietor: BlackBerry Limited, Waterloo, ON N2K 0A7 (CA)
(72) Inventor: FONG, Mo-Han, Ottawa, Ontario K1S 3J7 (CA); ZHANG, Hang, Nepean Ontario K2G 5Z1 (CA); VRZIC, Sophie, Nepean Ontario K2G 6C2 (CA); NOVAK, Robert, Ottawa Ontario K2A 1Z1 (CA)
(74) Representative: Fennell, Gareth Charles
(86) International application number: PCT/CA2010/001045
(87) International publication number: WO 2011/003187

(56) References cited:
- WO-A1-2008/041802
- WO-A1-2008/075843
- WO-A1-2008/075843
- CA-A1- 2 554 778
- CA-A1- 2 603 148
- US-A1- 2008 139 207
- US-A1- 2008 139 207

## Description

### CROSS-REFERENCES TO RELATED APPLICATIONS

This application claims the benefit of United States provisional patent application No. 61/223,162 filed July 2009.

This application is a continuation-in-part of a non-provisional application (serial number to be determined) resulting from a conversion under 37 C.F.R. § 1.53(c)(3) of United States provisional patent application No. 61/223,162 filed July 6, 2009, which claims the benefit of United States provisional patent application No. 61/078,505 filed July 2008.

### BACKGROUND OF THE INVENTION

### 1. Field of Invention

The invention relates generally to wireless communication, and more particularly to methods and apparatus related to handovers in wireless communication.

### 2. Description of Related Art

The IEEE Standard for Local and metropolitan area networks, Part 16: Air Interface for Fixed and Mobile Broadband Wireless Access Systems, Amendment 2: Physical and Medium Access Control Layers for Combined Fixed and Mobile Operation in Licensed Bands and Corrigendum 1 dated February 28, 2006 (the "IEEE 802.16e Standard") prescribed various standards for broadband wireless access systems, and is incorporated by reference herein in its entirety. For example, the IEEE 802.16e Standard prescribed various protocols for handing over a mobile station from an anchor base station to a target base station. The considerations for when a mobile station will effect a handover procedure from a anchor base station to a target base station are outside the scope of the IEEE 802.16e Standard, but generally a mobile station will communicate with an anchor base station for a period of time, and then initiate a handover procedure from the anchor base station to a target base station, following which the mobile station will communicate instead with the target base station when, for example, the mobile station has moved to a location where communication with the target base station is more effective than communication with the anchor base station.

The IEEE 802.16e Standard has some shortcomings. For example, before a mobile station can complete a handover to a target base station, the mobile station requires certain system configuration information (SCI) about the target base station, and the protocols prescribed by the IEEE 802.16e Standard for conveying such system configuration information of the target base station to the mobile station can be cumbersome, and can cause undesirable delays during the handover. Also, a mobile station typically transmits various media access control (MAC) messages (which may also be referred to simply as "control messages") to initiate a handover procedure, but the IEEE 802.16e Standard does not include a satisfactory protocol for facilitating reception of such MAC messages at various base stations that may be prospective target base stations for a handover. Further, before a mobile station can complete a handover to a target base station, the mobile station may desirably acquire data representing a distance between the mobile station and the target base station, so that the mobile station can transmit uplink signals at times calculated to cause those signals to be received at the target base station at times that are assigned for uplink signals from the base station, thereby avoiding interference with uplink signals from other mobile stations. However, the protocols prescribed by the IEEE 802.16e Standard for acquiring such data may be cumbersome and can cause unnecessary delays during handover. Still further, the IEEE 802.16e Standard does not prescribe acknowledgement by an anchor base station of an indication by a mobile station that the mobile station will perform a handover from the anchor base station to a target base station. Therefore, if the anchor base station did not receive the indication, or received the indication in error, then the anchor base station may continue attempts to communicate with the base station after the base station has completed a handover to the target base station, which may cause unnecessary interference and congestion. Also, if the anchor base station did not receive the indication, then the anchor base station may not have informed the target base station that the mobile station will perform a handover to the target base station, in which case the target base station may not be prepared to communicate with the mobile station, and a communication interruption may result. International patent application WO2008/041802 is further prior-art.

### SUMMARY OF THE INVENTION

In accordance with one illustrative embodiment, there is provided a method of facilitating a handover of a mobile station from an anchor base station to a target base station. The method involves: receiving, at the anchor base station from the mobile station, a handover indication signal indicating that the mobile station will perform the handover from the anchor base station to the target base station; and transmitting, to the mobile station, an acknowledgment signal acknowledging that the anchor base station received the handover indication signal.

In accordance with another illustrative embodiment, there is provided a base station apparatus including: an interface for facilitating radio communication with a mobile station; and a processor in communication with the interface. The processor is operably configured to: receive, from the interface, a handover indication signal from the mobile station indicating that the mobile station will perform a handover from the base station apparatus to a target base station; and cause the interface to transmit, to the mobile station, an acknowledgment signal acknowledging that the base station apparatus received the handover indication signal.

In accordance with another illustrative embodiment, there is provided a base station apparatus including: provisions for receiving a handover indication signal from a mobile station indicating that the mobile station will perform a handover from the base station apparatus to a target base station; and provisions for transmitting, to the mobile station, an acknowledgment signal acknowledging that the base station apparatus received the handover indication signal.

In accordance with another illustrative embodiment, there is provided a method of facilitating acquisition, by a mobile station in radio communication with an anchor base station, of data representing distances between the mobile station and base stations of an active set of base stations in radio communication with the mobile station. The active set includes a subset of neighbor base stations of the anchor base station. The method involves: transmitting, from the anchor base station to each other base station of the active set, a ranging resource signal identifying a reference code and a reference time associated with the mobile station; causing the mobile station to transmit a ranging signal including the reference code to each base station of the active set at a time in response to the reference time, such that each base station of the active set receives the ranging signal at a respective time; receiving, from each base station of the active set, a respective offset signal identifying a respective difference in time between the reference time and the respective time when the base station of the active set received the ranging signal; and transmitting, to the mobile station, a ranging control signal in response to the respective offset signals.

The method may further involve generating the reference code from a pseudo-random ly generated code.

Transmitting the ranging control signal may involve transmitting a ranging control signal representing an average of the respective differences in time between the reference time and the respective times when each base station of the active set received the ranging signal.

Transmitting the ranging control signal may involve transmitting a plurality of ranging control signals, each one of the plurality of ranging control signals associated with a respective base station of the active set and representing the respective difference in time between the reference time and the respective time when the base station of the active set received the ranging signal.

The active set may further include the anchor base station.

In accordance with another illustrative embodiment, there is provided a base station apparatus including: a first interface for facilitating radio communication with a mobile station; a second interface for facilitating communication with at least one neighbor base station in an active set in radio communication with the mobile station; and a processor in communication with the first and second interfaces. The processor is operably configured to: cause the second interface to transmit, to the at least one neighbor base station in the active set, a ranging resource signal identifying a reference code and a reference time associated with the mobile station; cause the first interface to transmit, to the mobile station, a ranging command signal directing the mobile station to transmit a ranging signal including the reference code to each base station in the active set at a time in response to the reference time, such that each base station in the active set receives the ranging signal at a respective time; receive, from the second interface, a respective offset signal from each neighbor base station in the active set, each respective offset signal identifying a respective difference in time between the reference time and the respective time when the neighbor base station in the active set received the ranging signal; and cause the first interface to transmit, to the mobile station, a ranging control signal in response to each of the respective offset signals.

The processor may be further operably configured to generate the reference code from a pseudo-random ly generated code.

The ranging control signal may represent an average of each of the respective differences in time between the reference time and the respective time when each base station in the active set received the ranging signal.

The ranging control signal may include a plurality of ranging control signals, each one of the plurality of ranging control signals associated with a respective one of each base station of the active set, and representing the respective difference in time between the reference time and the respective time when the respective base station received the ranging signal.

The active set may further include the apparatus, and the processor may be further operably configured to: receive, from the first interface, the ranging signal from the mobile station; calculate a difference in time between the reference time and a time when the apparatus received the ranging signal from the mobile station; and cause the first interface to transmit, to the mobile station, the ranging control signal in response to the difference in time between the reference time and the time when the apparatus received the ranging signal from the mobile station.

In accordance with another illustrative embodiment, there is provided a base station apparatus configured for radio communication with a mobile station and for communication with at least one neighbor base station in an active set in radio communication with the mobile station. The apparatus includes: provisions for transmitting, to the at least one neighbor base station in the active set, a ranging resource signal identifying a reference code and a reference time associated with the mobile station; provisions for transmitting, to the mobile station, a ranging command signal directing the mobile station to transmit a ranging signal including the reference code to each base station in the active set at a time in response to the reference time, such that each base station in the active set receives the ranging signal at a respective time; provisions for receiving a respective offset signal from each base station in the active set, each respective offset signal identifying a respective difference in time between the reference time and the respective time when the base station in the active set received the ranging signal; and provisions for transmitting, to the mobile station, a ranging control signal in response to each of the respective offset signals.

In accordance with another illustrative embodiment, there is provided a method of distributing system configuration information of a base station. The method involves: receiving, from a first mobile station having a first active set of base stations, a first active set signal indicating that the first mobile station has added the base station to the first active set; and in response to receiving the first active set signal, transmitting, to the first mobile station, a system configuration information signal including the system configuration information of the base station.

The system configuration information of the base station may include one or more of the information in the group consisting of: an identifier of the base station; an identifier of a preamble index of the base station; an identifier of a subchannel index of the base station; frequency assignment information for the base station; a time/frequency synchronization indicator associated with the base station; uplink channel information for the base station; downlink channel information for the base station; a trigger reference indicator associated with the base station; the equivalent isotropically radiated power of the base station; handover information for the base station; scheduling service information for the base station; supported mobility feature information for the base station; a paging group identifier associated with the base station; an identifier of channel bandwidth of the base station; an identifier of a cyclic prefix of the base station; an identifier of frame duration of the base station; an identifier of a fast-Fourier transform size of the base station; and an operation mode of the starting subchannelization of a frame and channel number of the base station.

The method may further involve receiving, from a second mobile station having a second active set of base stations, a second active set signal indicating that the second mobile station has added the base station to the second active set. Transmitting the system configuration information signal to the first mobile station may involve multicasting, in response to receiving the first and second indicator signals, the system configuration information signal to the first and second mobile stations.

In accordance with another illustrative embodiment, there is provided a base station apparatus including: an interface for facilitating radio communication with a first mobile station having a first active set of base stations; a computer-readable memory having a store for storing system configuration information of a plurality of base stations; and a processor in communication with the interface and the computer-readable memory. The processor is operably configured to: receive, from the interface, a first active set signal, from the first mobile station, indicating that the first mobile station has added one of the plurality of base stations to the first active set; and cause the interface to transmit to the first mobile station, in response to receiving the first active set signal, a system configuration information signal including the system configuration information of the one of the plurality of base stations.

The system configuration information of the base station may include one or more of the information in the group consisting of: an identifier of the base station; an identifier of a preamble index of the base station; an identifier of a subchannel index of the base station; frequency assignment information for the base station; a time/frequency synchronization indicator associated with the base station; uplink channel information for the base station; downlink channel information for the base station; a trigger reference indicator associated with the base station; the equivalent isotropically radiated power of the base station; handover information for the base station; scheduling service information for the base station; supported mobility feature information for the base station; a paging group identifier associated with the base station; an identifier of channel bandwidth of the base station; an identifier of a cyclic prefix of the base station; an identifier of frame duration of the base station; an identifier of a fast-Fourier transform size of the base station; and an operation mode of the starting subchannelization of a frame and channel number of the base station.

The processor may be further operably configured to receive, from the interface, a second active set signal, from a second mobile station having a second active set of base stations, indicating that the second mobile station has added the one of the plurality of base stations to the second active set. The processor may be further operably configured to cause the interface to multicast, in response to receiving the first and second indicator signals, the system configuration signal to the first and second mobile stations.

In accordance with another illustrative embodiment, there is provided a base station apparatus including: provisions for storing system configuration information of a plurality of base stations; provisions for receiving an active set signal, from a mobile station having an active set, indicating that the mobile station has added one of the plurality of base stations to the active set; and provisions for transmitting to the mobile station, in response to receiving the active set signal, a system configuration information signal including the system configuration information of the one of the plurality of base stations.

In accordance with another illustrative embodiment, there is provided a method of controlling a mobile station in radio communication over an uplink control channel with a plurality of base stations. The method involves: receiving a respective channel condition signal from each one of the plurality of base stations, each respective channel condition signal indicating a respective channel condition of control signals received from the mobile station over the uplink control channel at the one of the plurality of base stations; determining an uplink control channel power parameter in response to the respective channel condition signals; and transmitting, to the mobile station, a power control signal including the uplink control channel power parameter.

Each of the channel conditions may include a signal-to-noise ratio.

Determining the uplink control channel power parameter may involve determining a ratio of: a threshold signal-to-noise ratio; and a lowest one of the respective signal-to-noise ratios of the control signals received from the mobile station over the uplink control channel at each one of the plurality of base stations.

In accordance with another illustrative embodiment, there is provided a base station apparatus including: a first interface for facilitating radio communication with a mobile station; a second interface for facilitating communication with at least one neighbor base station in an active set in radio communication with the mobile station; and a processor in communication with the first and second interfaces. The processor is operably configured to: receive, from the second interface, a respective channel condition signal from each neighbor base station of the active set, each respective channel condition signal indicating a respective channel condition of control signals received from the mobile station over the uplink control channel at the neighbor base station of the active set; determine an uplink control channel power parameter in response to: a channel condition of control signals received from the mobile station over the uplink control channel at the apparatus; and the respective channel condition signals received from the at least one neighbor base station of the active set; and cause the first interface to transmit, to the mobile station, a power control signal including the uplink control channel power parameter.

Each of the channel conditions may include a signal-to-noise ratio.

The processor may be operably configured to determine the uplink control channel power parameter in response to a ratio of: a threshold signal-to-noise ratio; and a lowest one of: the signal-to-noise ratio of the control signals received from the mobile station over the uplink control channel at the apparatus; and the respective signal-to-noise ratios of the control signals received from the mobile station over the uplink control channel at each neighbor base station of the active set.

In accordance with another illustrative embodiment, there is provided a base station apparatus configured for radio communication with a mobile station and for communication with at least one neighbor base station in an active set in radio communication with the mobile station. The apparatus includes: provisions for receiving a respective channel condition signal from each neighbor base station of the active set, each respective channel condition signal indicating a respective channel condition of control signals received from the mobile station over the uplink control channel at the neighbor base station of the active set; provisions for determining an uplink control channel power parameter in response to: a channel condition of control signals received from the mobile station over the uplink control channel at the apparatus; and the respective channel condition signals received from the at least one neighbor base station of the active set; and provisions for transmitting, to the mobile station, a power control signal including the uplink control channel power parameter.

In accordance with another illustrative embodiment, there is provided a method of transmitting a control signal to a plurality of base stations in an active set of a mobile station. The method involves: for each base station in the active set, transmitting the control signal to the base station on a respective control channel.

In accordance with another illustrative embodiment, there is provided a mobile station apparatus including: an interface for facilitating radio communication with a plurality of base stations in an active set of the apparatus; and a processor in communication with the interface and operably configured to transmit the control signal to each base station in the active set on a respective control channel.

In accordance with another illustrative embodiment, there is provided a mobile station apparatus including: provisions for facilitating radio communication with a plurality of base stations in an active set of the apparatus; and provisions for transmitting the control signal to each base station in the active set on a respective control channel.

Other aspects and features of the present invention will become apparent to those ordinarily skilled in the art upon review of the following description of specific embodiments in conjunction with the accompanying figures.

### BRIEF DESCRIPTION OF THE DRAWINGS

Embodiments of the present application will now be described, by way of example only, with reference to the accompanying drawing figures, wherein:
- Figure **1**: is a block diagram of an example cellular communication system;
- Figure **2**: is a block diagram of an example base station shown in Figure **1**;
- Figure **3**: is a block diagram of an example mobile station shown in Figure **1**;
- Figure **4**: is a block diagram of an example relay station shown in Figure **1**;
- Figure **5**: is a block diagram of a logical breakdown of an example OFDM transmitter of the base station of Figure **2**;
- Figure **6**: is a block diagram of a logical breakdown of an example OFDM receiver of the wireless terminal of Figure **3**;

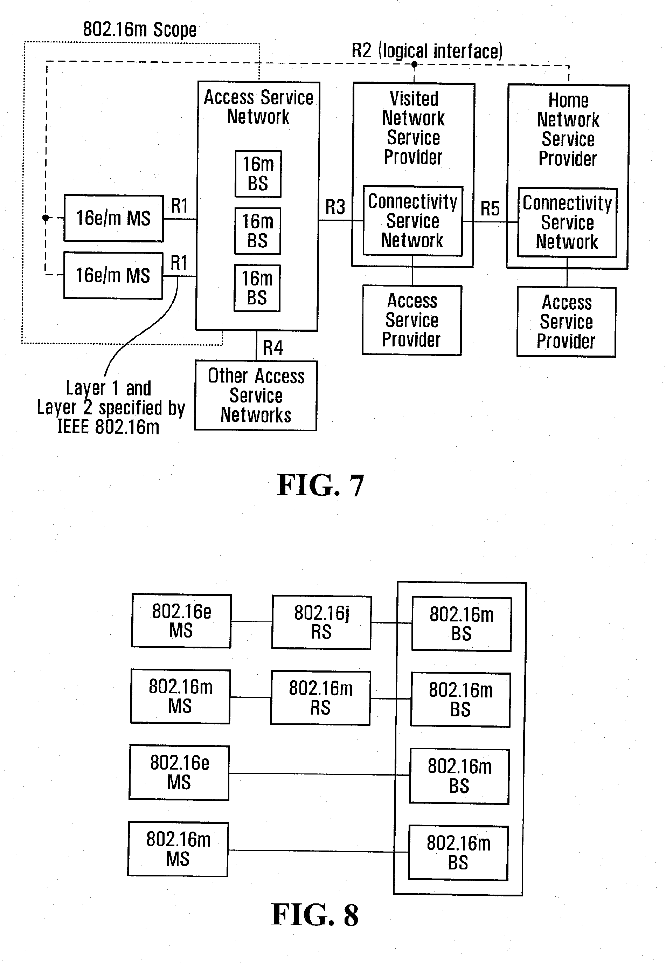

- Figure **7**: is a schematic diagram of a network architecture implemented by the cellular communication system of Figure **1** and corresponds to Figure **1** of IEEE 802.16m-08/003r1;
- Figure **8**: is a schematic diagram of an architecture of the relay station of Figure **4** and corresponds to Figure **2** of IEEE 802.16m-08/003r1;

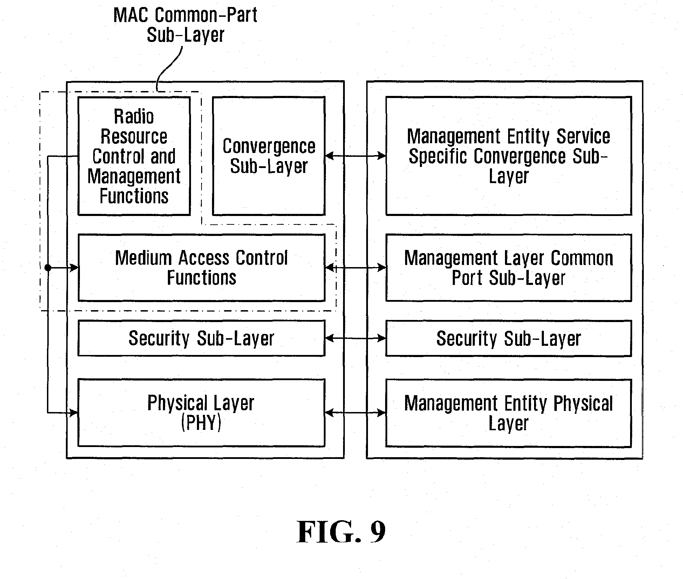

- Figure **9**: is a schematic representation of a system reference model of the cellular communication system of Figure **1** and corresponds to Figure **3** of IEEE 802.16m-08/003r1;

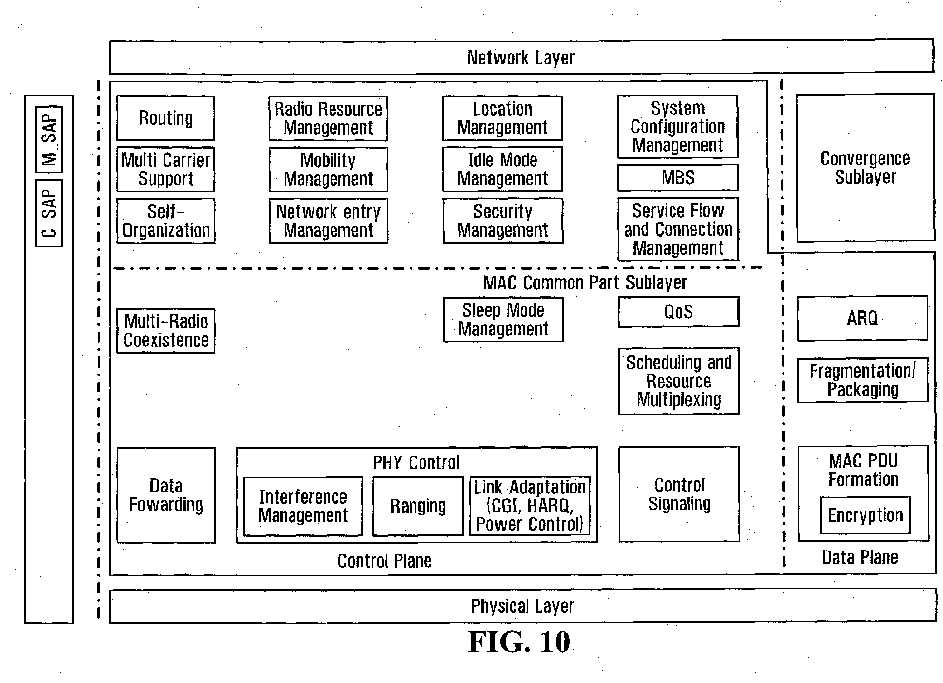

- Figure **10**: is a schematic representation of a Protocol Structure in accordance with IEEE 802.16m and corresponds to Figure **4** of IEEE 802.16m-08/003r1;

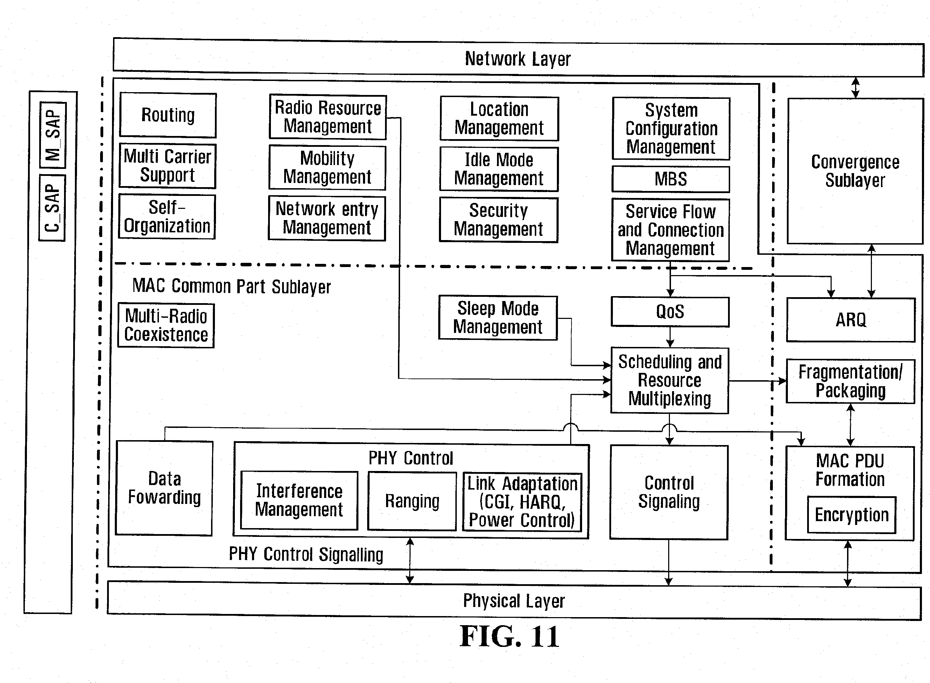

- Figure **11**: is a processing flow diagram of a MS/BS Data Plane in accordance with IEEE 802.16m and corresponds to Figure **5** of IEEE 802.16m-08/003r1;

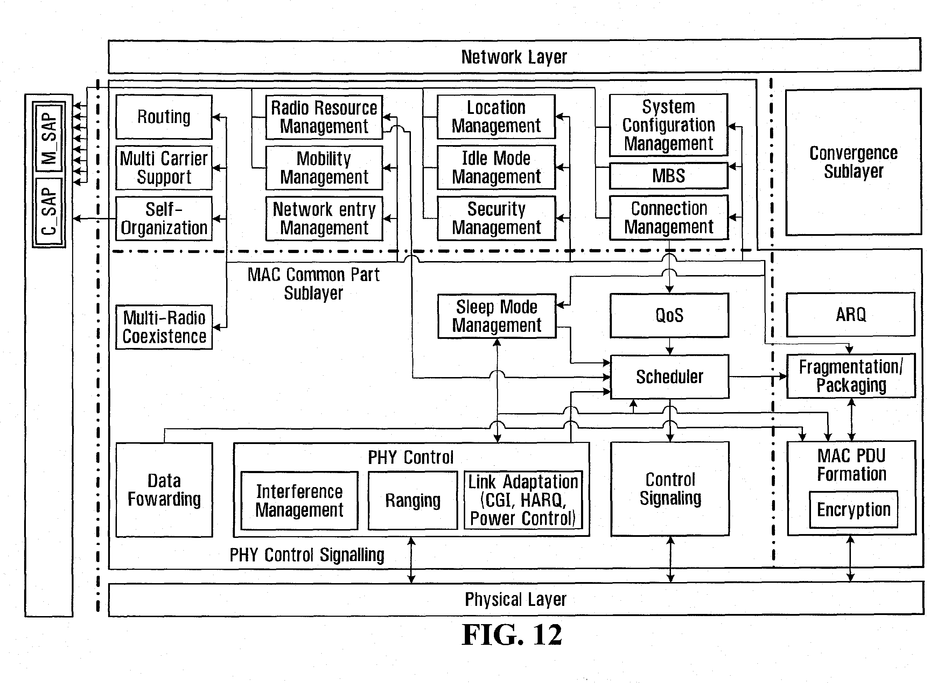

- Figure **12**: is a processing flow diagram of the MS/BS Control Plane in accordance with IEEE **802.16**m and corresponds to Figure **6** of IEEE 802.16m-08/003rl;

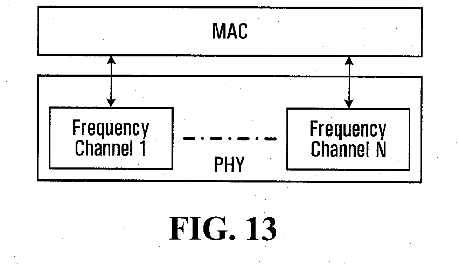

- Figure **13**: is a schematic representation of a protocol architecture to support a multicarrier system and corresponds to Figure **7** of IEEE 802.16m-08/003rl;
- Figure **14**: is a schematic representation of an example control system of the base station of Figure **2**;
- Figure **15**: is a schematic representation of an example control system of the mobile station of Figure **3**;
- Figure **16**: is a schematic representation of an example preamble index message sent by the base station control system of Figure **14**;
- Figure **17**: is a schematic representation of an example active set message sent by the mobile station control system of Figure **15**;
- Figure **18**: is a block diagram of example system configuration information distribution codes executed by a microprocessor of the base station control system of Figure **14**;
- Figure **19**: is a schematic representation of an example system control information message sent by the base station control system of Figure **14**;
- Figure **20**: is a block diagram of example power control codes executed by the microprocessor of Figure **14**;
- Figure **21**: is a schematic representation of an example channel condition request message sent by the base station control system of Figure **14**;
- Figure **22**: is a schematic representation of an example channel condition message sent by the base station control system of Figure **14**;
- Figure **23**: is a schematic representation of an example power control message sent by the base station control system of Figure **14**;
- Figure **24**: is a block diagram of example control allocation codes executed by the microprocessor of Figure **14**;
- Figure **25**: is a schematic representation of an example control channel allocation message sent by the base station control system of Figure **14**;
- Figure **26**: is a block diagram of example uplink control codes executed by a microprocessor of Figure **15**;
- Figure **27**: is a block diagram of example ranging initiation codes executed by the microprocessor of Figure **14**;
- Figure **28**: is a schematic representation of an example ranging resource message sent by the base station control system of Figure **14**;
- Figure **29**: is a schematic representation of an example ranging command message sent by the base station control system of Figure **14**;
- Figure **30**: is a block diagram of example ranging codes executed by the microprocessor of Figure **15**;
- Figure **31**: is a schematic representation of an example offset message sent by the base station control system of Figure **14**;
- Figure **32**: is a schematic representation of an example single ranging parameter ranging control message sent by the base station control system of Figure **14**;
- Figure **33**: is a schematic representation of an example multiple ranging parameter ranging control message sent by the base station control system of Figure **14**;
- Figure **34**: is a block diagram of example handover codes executed by the microprocessor of Figure **15**;
- Figure **35**: is a schematic representation of an example handover indication message sent by the mobile station control system of Figure **15**;
- Figure **36**: is a block diagram of example handover acknowledger codes executed by the microprocessor of Figure **14**; and
- Figure **37**: is a schematic representation of an example handover acknowledgment message sent by the base station control system of Figure **14**.

Like reference numerals are used in different figures to denote similar elements.

### DETAILED DESCRIPTION

### Wireless System Overview

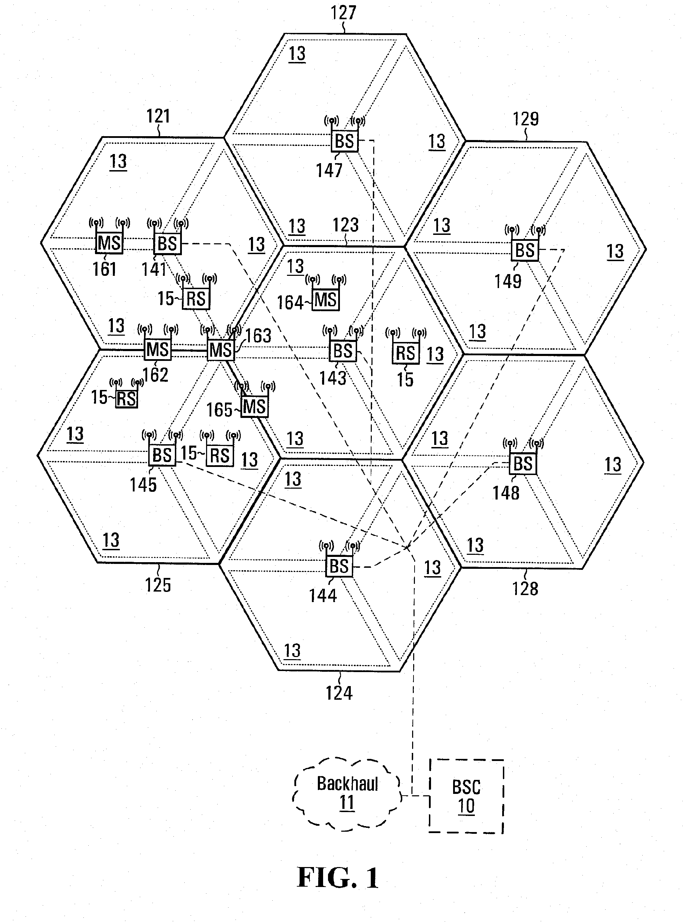

Referring to the drawings, Figure 1 shows a base station controller (BSC) **10** which controls wireless communications within multiple cells **121, 123, 124, 125, 127, 128,** and **129,** which cells are served by corresponding base stations (BS) **141, 143, 144, 145, 147, 148,** and **149** respectively. In some configurations, each cell is further divided into multiple sectors **13** or zones (not shown). In general, each base station **141, 143, 144, 145, 147, 148,** and **149** facilitates communications using Orthogonal Frequency-Division Multiplexing (OFDM) digital modulation scheme with mobile stations (MS) and/or wireless terminals **161, 162, 163, 164,** and **165,** which are within one of the cells **121, 123, 124, 125, 127, 128,** and **129.**

Movement of the mobile stations **161, 162, 163, 164,** and **165** in relation to the base stations **141, 143, 144, 145, 147, 148,** and **149** results in significant fluctuation in channel conditions. As illustrated, the base stations **141, 143, 144, 145, 147, 148,** and **149** and the mobile stations **161, 162, 163, 164,** and **165** may include multiple antennas to provide spatial diversity for communications. In some configurations, relay stations **15** may assist in communications between the base stations **141, 143, 144, 145, 147, 148,** and **149** and the mobile stations **161, 162, 163, 164,** and **165.** The mobile stations **161, 162, 163, 164,** and **165** can be handed off from any of the cells **121, 123, 124, 125, 127, 128,** and **129,** the sectors **13,** the zones (not shown), the base stations **141, 143, 144, 145, 147, 148,** and **149,** or the relay stations **15** to another one of the cells **121, 123, 124, 125, 127, 128,** and **129,** the sectors **13,** the zones (not shown), the base stations **141, 143, 144, 145, 147, 148,** and **149,** or the relay stations **15.** In some configurations, the base stations **141, 143, 144, 145, 147, 148,** and **149** communicate with each other and with another network (such as a core network or the internet, both not shown) over a backhaul network **11.** In some configurations, the base station controller **10** is not needed.

### Base Station

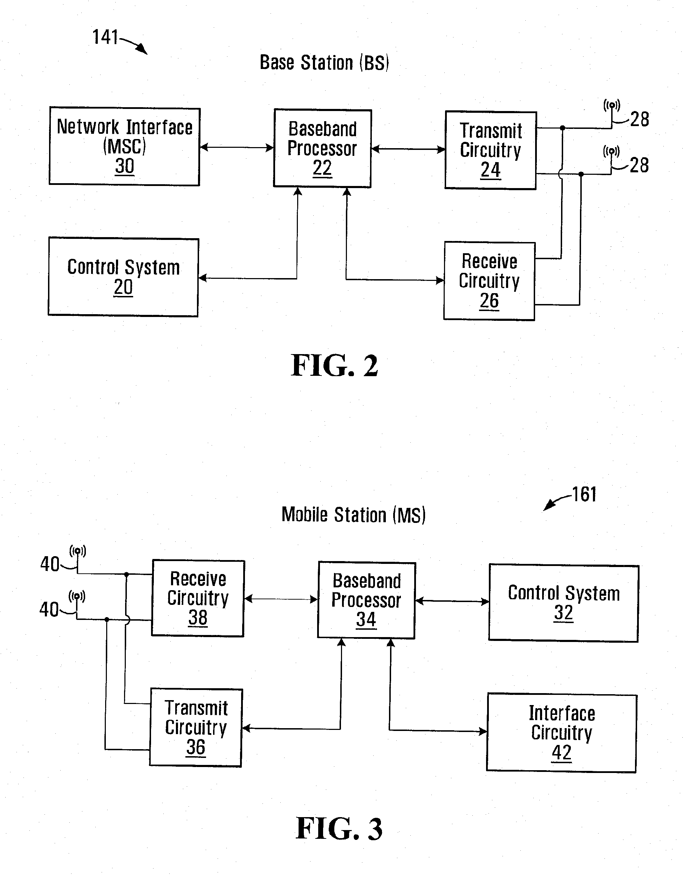

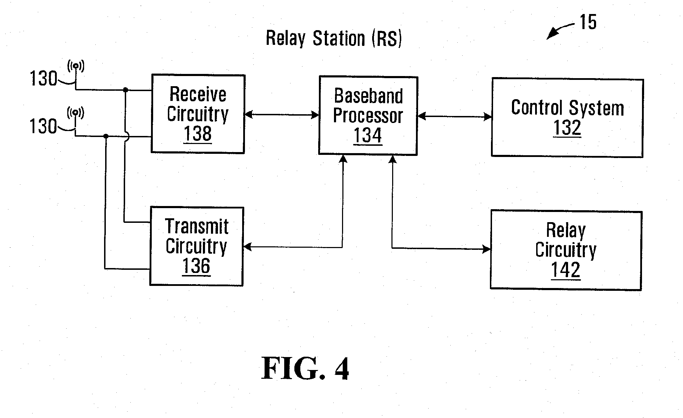

With reference to Figure **2****,** the base station **141** is illustrated, and the base stations **143, 144, 145, 147, 148,** and **149** are substantially the same as the base station **141.** The base station **141** generally includes a control system **20,** a baseband processor **22,** transmit circuitry **24,** receive circuitry **26,** multiple transmit antennas **28,** and a network interface **30.** The receive circuitry **26** receives radio frequency signals bearing information from one or more remote transmitters provided by the mobile stations **161, 162, 163, 164,** and **165** (the mobile station **161** is illustrated in Figure **3**) and the relay stations **15** (illustrated in Figure **4**). A low noise amplifier and a filter (not shown) may cooperate to amplify and remove broadband interference from the received signal for processing. Downconversion and digitization circuitry (not shown) will then downconvert the filtered, received signal to an intermediate or baseband frequency signal, which is then digitized into one or more digital streams.

The baseband processor **22** processes the digitized streams to extract the information or data bits conveyed in the received signal. This processing typically comprises demodulation, decoding, and error correction operations. As such, the baseband processor **22** is generally implemented in one or more digital signal processors (DSPs) or application-specific integrated circuits (ASICs). The information is then sent across a wireless network via the network interface **30** or transmitted to one of the mobile stations **161, 162, 163, 164,** and **165** serviced by one or more of the base stations **141, 143, 144, 145, 147, 148,** and **149,** either directly or with the assistance of one of the relay stations **15.** The network interface **30** thus facilitates communication with the base stations **143, 144, 145, 147, 148,** and **149,** for example.

To perform transmitting functions, the baseband processor **22** receives digitized data, which may represent voice, data, or control information, from the network interface **30** under the control of the control system **20,** and produces encoded data for transmission. The encoded data is output to the transmit circuitry **24,** where it is modulated by one or more carrier signals having a desired transmit frequency or frequencies. A power amplifier (not shown) will amplify the modulated carrier signals to a level appropriate for transmission, and deliver the modulated carrier signals to the transmit antennas **28** through a matching network (not shown). The antennas **28** thus function as an interface for facilitating radio communication with one or more of the mobile stations **161, 162, 163, 164,** and **165.** Modulation and processing details are described in greater detail below.

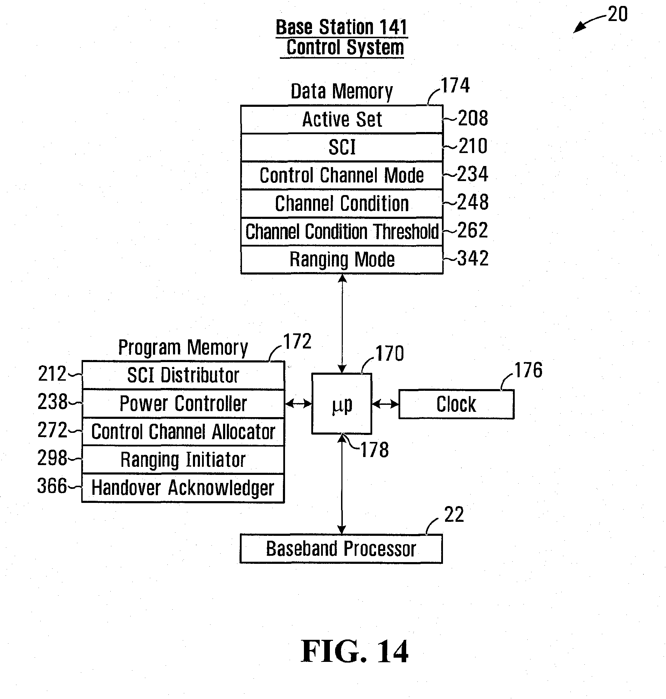

Referring to Figure **14****,** the control system **20** is illustrated schematically. The control system **20** in the embodiment shown includes a microprocessor **170,** and includes a program memory **172,** a data memory **174,** and a clock **176** all in communication with the microprocessor **170.** The microprocessor **170** also includes a baseband processor interface **178** for communicating with the baseband processor **22** (shown in Figure **2**). Therefore, in the embodiment shown, the control system **20** communicates with the other base stations and the mobile stations shown in Figure **1** through the baseband processor interface **178,** through the baseband processor **22,** and through the antennas **28** or the network interface **30.** In the embodiment shown, the program memory **172** is a known computer-readable memory, and generally includes codes for directing the microprocessor **170** to carry out various functions of the control system **20.** The data memory **174** is also a known computer-readable memory generally for storing data related to the functions of the control system **20.** The clock **176** stores a current time value, and in the embodiment shown is synchronized with corresponding clocks of the base stations **143, 144, 145, 147, 148,** and **149.** Although the control system **20** is illustrated in the embodiment shown as including the microprocessor **170,** the program memory **172,** the data memory **174,** and the clock **176,** one skilled in the art will appreciate that alternative embodiments may include different components or different combinations of components.

### Mobile Station

With reference to Figure **3****,** the mobile station **161** is illustrated, and the mobile stations **162, 163, 164,** and **165** are substantially the same as the mobile station **161.** Similarly to the base station **141,** the mobile station **161** includes a control system **32,** a baseband processor **34,** transmit circuitry **36,** receive circuitry 38, multiple receive antennas **40,** and user interface circuitry **42.** The receive circuitry **38** receives radio frequency signals bearing information from one or more of the base stations **141, 143, 144, 145, 147, 148,** and **149** and the relay stations **15.** A low noise amplifier and a filter (not shown) may cooperate to amplify and remove broadband interference from the signal for processing. Downconversion and digitization circuitry (not shown) will then downconvert the filtered, received signal to an intermediate or baseband frequency signal, which is then digitized into one or more digital streams.

The baseband processor **34** processes the digitized streams to extract information or data bits conveyed in the signal. This processing typically comprises demodulation, decoding, and error correction operations. The baseband processor **34** is generally implemented in one or more digital signal processors (DSPs) and application specific integrated circuits (ASICs).

For transmission, the baseband processor **34** receives digitized data, which may represent voice, video, data, or control information, from the control system **32,** which it encodes for transmission. The encoded data is output to the transmit circuitry **36,** where it is used by a modulator to modulate one or more carrier signals at a desired transmit frequency or frequencies. A power amplifier (not shown) amplifies the modulated carrier signals to a level appropriate for transmission, and delivers the modulated carrier signal to the receive antennas **40** through a matching network (not shown). Various modulation and processing techniques available to those skilled in the art may be used for signal transmission between the mobile stations **161, 162, 163, 164,** and **165** and the base stations **141, 143, 144, 145, 147, 148,** and **149,** either directly or via the relay stations **15.** The antennas **40** thus function as an interface for facilitating radio communication with one or more of the base stations **141, 143, 144, 145, 147, 148,** and **149.**

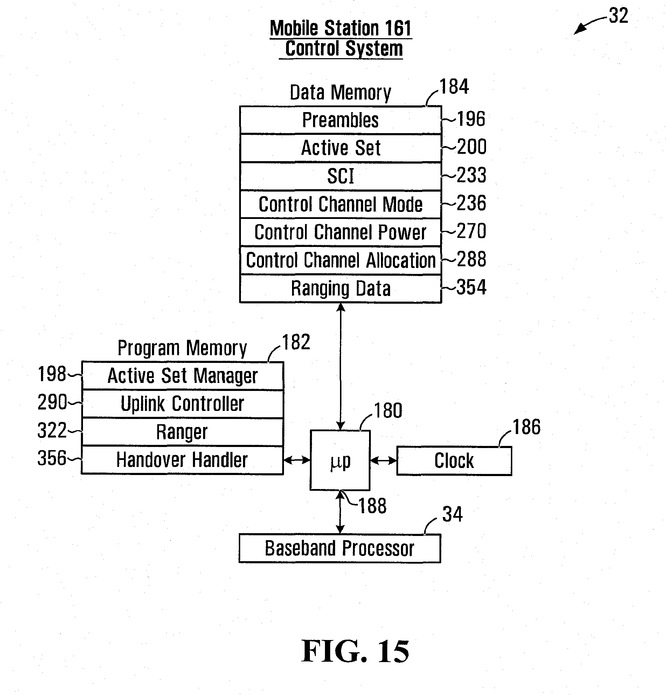

Referring to Figure **15****,** the control system **32** is illustrated schematically. The control system **32** includes a microprocessor **180,** and includes a program memory **182,** a data memory **184,** and a clock **186** all in communication with the microprocessor **180.** The microprocessor **180** also includes a baseband processor interface port **188** for communicating with the baseband processor **34** (shown in Figure **3**). Therefore, in the embodiment shown, the control system **32** communicates with the base stations shown in Figure **1** through the baseband processor interface **188,** through the baseband processor **34,** and through the antennas **40.** In the embodiment shown, the program memory **182** is a known computer-readable memory, and generally stores codes for directing the microprocessor **180** to carry out various functions of the control system **32.** The data memory **184** is also a known computer-readable memory generally for storing data related to the functions of the control system **32.** The clock **186** stores a value representing a current time, and in the embodiment shown is synchronized with corresponding clocks of the mobile stations **162, 163, 164,** and **165,** with the clock **176** (shown in Figure **14**) of the base station **141,** and with corresponding clocks of the base stations **143, 144, 145, 147, 148,** and **149.** Although the control system **32** is illustrated in the embodiment shown as including the microprocessor **180,** the program memory **182,** the data memory **184,** and the clock **186,** one skilled in the art will appreciate that alternative embodiments may include different components or different combinations of components.

### OFDM Modulation

In OFDM modulation, the transmission band is divided into multiple, orthogonal carrier waves. Each carrier wave is modulated according to the digital data to be transmitted. Because OFDM divides the transmission band into multiple carriers, the bandwidth per carrier decreases and the modulation time per carrier increases. Since the multiple carriers are transmitted in parallel, the transmission rate for the digital data, or symbols, on any given carrier is lower than when a single carrier is used.

OFDM modulation includes the use of an Inverse Fast Fourier Transform (IFFT) on the information to be transmitted. For demodulation, a Fast Fourier Transform (FFT) is performed on the received signal to recover the transmitted information. In practice, the IFFT and FFT are provided by digital signal processing involving an Inverse Discrete Fourier Transform (IDFT) and Discrete Fourier Transform (DFT), respectively. Accordingly, a characterizing feature of OFDM modulation is that orthogonal carrier waves are generated for multiple bands within a transmission channel. The modulated signals are digital signals having a relatively low transmission rate and capable of staying within their respective bands. The individual carrier waves are not modulated directly by the digital signals. Instead, all carrier waves are modulated at once by IFFT processing.

In operation, OFDM is preferably used for at least downlink transmission from the base stations **141, 143, 144, 145, 147, 148,** and **149** to the mobile stations **161, 162, 163, 164,** and **165.** Each of the base stations **141, 143, 144, 145, 147, 148,** and **149** is equipped with "n" of the transmit antennas **28** (n>=1), and each of the mobile stations **161, 162, 163, 164,** and **165** is equipped with "m" of the receive antennas **40** (m>=1). Notably, the respective antennas can be used for reception and transmission using appropriate duplexers or switches and are so labeled only for clarity.

When the relay stations **15** are used, OFDM is preferably used for downlink transmission from the base stations **141, 143, 144, 145, 147, 148,** and **149** to the relay stations and from the relay stations to the mobile stations **161, 162, 163, 164,** and **165.**

### Relay Station

With reference to Figure **4****,** an exemplary relay station **15** is illustrated. Similarly to the base station **141,** and the mobile station **161,** the relay station **15** includes a control system **132,** a baseband processor **134,** transmit circuitry **136,** receive circuitry **138,** multiple antennas **130,** and relay circuitry **142.** The relay circuitry **142** enables the relay station **15** to assist in communications between one of the base stations **141, 143, 144, 145, 147, 148,** and **149** and one of the mobile stations **161, 162, 163, 164,** and **165.** The receive circuitry **138** receives radio frequency signals bearing information from one or more of the base stations **141, 143, 144, 145, 147, 148,** and **149** and the mobile stations **161, 162, 163, 164,** and **165.** A low noise amplifier and a filter (not shown) may cooperate to amplify and remove broadband interference from the signal for processing. Downconversion and digitization circuitry (not shown) will then downconvert the filtered, received signal to an intermediate or baseband frequency signal, which is then digitized into one or more digital streams.

The baseband processor **134** processes the digital streams to extract information or data bits conveyed in the signal. This processing typically comprises demodulation, decoding, and error correction operations. The baseband processor **134** is generally implemented in one or more digital signal processors (DSPs) and application specific integrated circuits (ASICs).

For transmission, the baseband processor **134** receives digitized data, which may represent voice, video, data, or control information, from the control system **132,** which it encodes for transmission. The encoded data is output to the transmit circuitry **136,** where it is used by a modulator to modulate one or more carrier signals at a desired transmit frequency or frequencies. A power amplifier (not shown) will amplify the modulated carrier signals to a level appropriate for transmission, and deliver the modulated carrier signal to the antennas **130** through a matching network (not shown). Various modulation and processing techniques available to those skilled in the art may be used for signal transmission between the mobile stations **161, 162, 163, 164,** and **165** and the base stations **141, 143, 144, 145, 147, 148,** and **149,** either directly or indirectly via the relay stations **15,** as described above.

### OFDM Transmissions

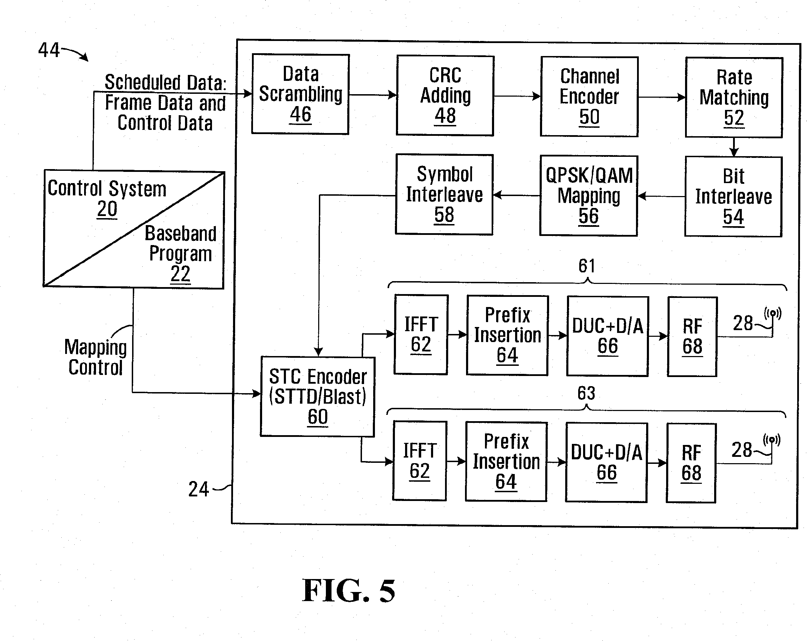

With reference to Figure **5****,** a logical OFDM transmission architecture will be described. Referring to Figure **1****,** initially, the base station controller **10** will send data to be transmitted to various ones of the mobile stations **161, 162, 163, 164,** and **165** to the base stations **141, 143, 144, 145, 147, 148,** and **149,** either directly or with the assistance of one of the relay stations **15.** The base stations **141, 143, 144, 145, 147, 148,** and **149** may use channel quality indicators (CQIs) associated with the mobile stations **161, 162, 163, 164,** and **165** to schedule the data for transmission and to select appropriate coding and modulation for transmitting the scheduled data. The CQIs may be provided directly by the mobile stations **161, 162, 163, 164,** and **165** or may be determined by the base stations **141, 143, 144, 145, 147, 148,** and **149** based on information provided by the mobile stations. In either case, the CQI for each of the mobile stations **161, 162, 163, 164,** and **165** is a function of the degree to which the channel amplitude (or response) varies across the OFDM frequency band.

### Transmitting Scheduled Data to Mobile Station

Referring to Figures **1** and **5****,** the scheduled data **44** is a stream of bits and this stream is scrambled in a manner reducing the peak-to-average power ratio associated with the data using data scrambling logic **46.** A cyclic redundancy check (CRC) for the scrambled data is determined and appended to the scrambled data using CRC adding logic **48.** Next, channel coding is performed using a channel encoder **50** to effectively add redundancy to the data to facilitate recovery and error correction at the mobile stations **161, 162, 163, 164,** and **165.** The channel coding for a particular one of the mobile stations **161, 162, 163, 164,** and **165** is based on the CQI associated with the particular mobile station. In some implementations, the channel encoder **50** uses known Turbo encoding techniques. The encoded data is then processed by rate matching logic **52** to compensate for data expansion associated with encoding.

Bit interleaver logic **54** systematically reorders the bits in the encoded data to minimize loss of consecutive data bits. The re-ordered data bits are systematically mapped into corresponding symbols depending on the chosen baseband modulation by mapping logic **56.** Preferably, Quadrature Amplitude Modulation (QAM) or Quadrature Phase Shift Key (QPSK) modulation is used. The degree of modulation is preferably chosen based on the CQI associated with the particular mobile station. The symbols may be systematically reordered using symbol interleaver logic **58** to further bolster the immunity of the transmitted signal to periodic data loss caused by frequency selective fading.

At this point, groups of bits have been mapped into symbols representing locations in an amplitude and phase constellation. When spatial diversity is desired, blocks of symbols are then processed by space-time block code (STC) encoder logic **60,** which modifies the symbols in a fashion making the transmitted signals more resistant to interference and more readily decoded at the mobile stations **161, 162, 163, 164,** and **165.** The STC encoder logic **60** will process the incoming symbols and provide "n" outputs corresponding to the number of the transmit antennas **28** for the base stations **141, 143, 144, 145, 147, 148,** and **149.** The control system **20** and/or the baseband processor **22** as described above with respect to Figure **5** will provide a mapping control signal to control the STC encoder. At this point, assume the symbols for the "n" outputs are representative of the data to be transmitted and capable of being recovered by the mobile stations **161, 162, 163, 164,** and **165.**

For the present example, assume the base station (**141** in Figure **1**) has two of the transmit antennas **28** (n=2) and the STC encoder logic **60** provides two output streams of symbols. Each of the output streams of symbols is sent to a corresponding output path **61, 63,** illustrated separately for ease of understanding. Those skilled in the art will recognize that one or more processors may be used to provide such digital signal processing, alone or in combination with other processing described herein. In each output path an IFFT processor **62** will operate on symbols provided to it to perform an inverse Fourier Transform. The output of the IFFT processor **62** provides symbols in the time domain. The time domain symbols also known as OFDM symbols are grouped into frames, by assigning a prefix by prefix insertion function **64.** The resultant frame is up-converted in the digital domain to an intermediate frequency and converted to an analog signal via respective digital up-conversion (DUC) and digital-to-analog (D/A) conversion circuitry **66.** The resultant (analog) signals from each output path are then simultaneously modulated at the desired RF frequency, amplified, and transmitted via RF circuitry **68** and the transmit antennas **28** to one of the mobile stations **161, 162, 163, 164,** and **165.** Notably, pilot signals known by the intended one of the mobile stations **161, 162, 163, 164,** and **165** are scattered among the sub-carriers. The mobile stations **161, 162, 163, 164,** and **165,** which are discussed in detail below, will use the pilot signals for channel estimation.

### Reception of Signals at the Mobile Station

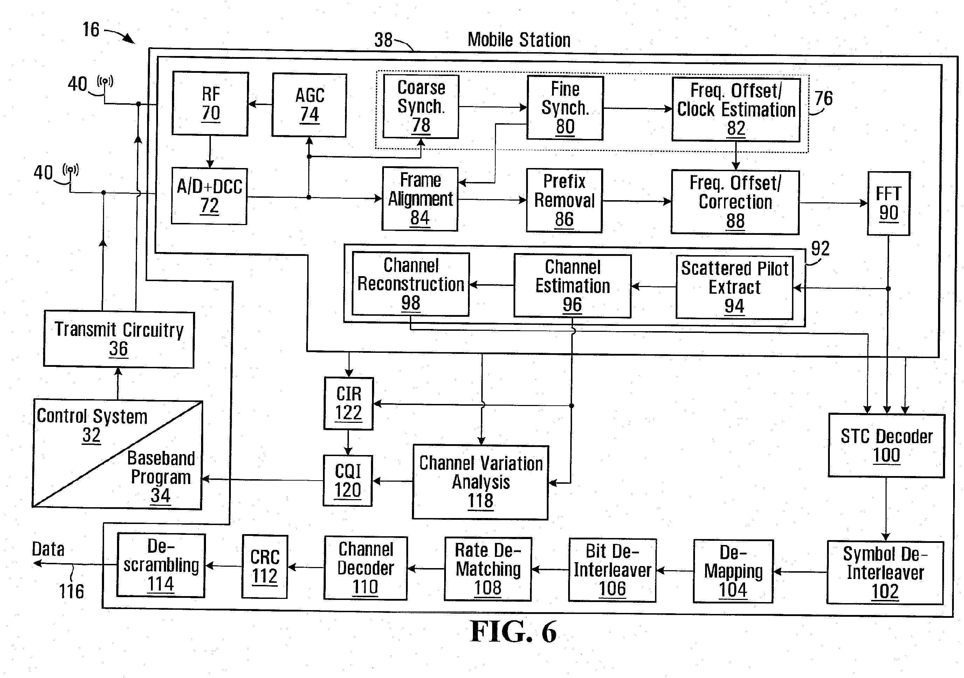

Reference is now made to Figure **6** to illustrate reception of the transmitted signals by the mobile station **161,** either directly from one of the base stations (such as the base station **141** in Figure **1****,** for example) or with the assistance of one of the relay stations (**15** in Figure **1**)**.** Upon arrival of the transmitted signals at each of the receive antennas **40** of one of the mobile stations **161, 162, 163, 164,** and **165,** the respective signals are demodulated and amplified by corresponding RF circuitry **70.** For the sake of conciseness and clarity, only one of the two receive paths is described and illustrated in detail. Analog-to-digital (A/D) converter and down-conversion circuitry **72** digitizes and downconverts the analog signal for digital processing. The resultant digitized signal may be used by automatic gain control circuitry (AGC) **74** to control the gain of amplifiers in the RF circuitry **70** based on the received signal level.

Initially, the digitized signal is provided to synchronization logic shown generally at **76,** which includes coarse synchronization function **78,** which buffers several OFDM symbols and calculates an auto-correlation between the two successive OFDM symbols. A resultant time index corresponding to the maximum of the correlation result determines a fine synchronization search window, which is used by fine synchronization function **80** to determine a precise framing starting position based on the headers. The output of the fine synchronization function **80** facilitates frame acquisition by frame alignment logic **84.** Proper framing alignment is important so that subsequent FFT processing provides an accurate conversion from the time domain to the frequency domain. The fine synchronization algorithm is based on the correlation between the received pilot signals carried by the headers and a local copy of the known pilot data. Once frame alignment acquisition occurs, the prefix of the OFDM symbol is removed with prefix removal logic **86** and resultant samples are sent to a frequency offset/correction function **88,** which compensates for the system frequency offset caused by the unmatched local oscillators in a transmitter and a receiver. Preferably, the synchronization logic **76** includes a frequency offset and clock estimation function **82,** which uses the headers to help estimate frequency offset and clock offset in the transmitted signal and provide those estimates to the frequency offset/correction function **88** to properly process OFDM symbols.

At this point, the OFDM symbols in the time domain are ready for conversion to the frequency domain by an FFT processing function **90.** The result is a set of frequency domain symbols, which are sent to a processing function **92.** The processing function **92** extracts the scattered pilot signal using a scattered pilot extraction function **94,** determines a channel estimate based on the extracted pilot signal using a channel estimation function **96,** and provides channel responses for all sub-carriers using a channel reconstruction function **98.** In order to determine a channel response for each of the sub-carriers, the pilot signal is essentially multiple pilot symbols that are scattered among the data symbols throughout the OFDM sub-carriers in a known pattern in both time and frequency.

Continuing with Figure **6****,** the processing logic compares the received pilot symbols with the pilot symbols that are expected in certain sub-carriers at certain times to determine a channel response for the sub-carriers in which pilot symbols were transmitted. The results are interpolated to estimate a channel response for most, if not all, of the remaining sub-carriers for which pilot symbols were not provided. The actual and interpolated channel responses are used to estimate an overall channel response, which includes the channel responses for most, if not all, of the sub-carriers in the OFDM channel.

The frequency domain symbols and channel reconstruction information, which are derived from the channel responses for each receive path are provided to an STC decoder **100,** which provides STC decoding on both received paths to recover the transmitted symbols. The channel reconstruction information provides equalization information to the STC decoder **100** sufficient to remove the effects of the transmission channel when processing the respective frequency domain symbols.

The recovered symbols are placed back in order using symbol de-interleaver logic **102,** which corresponds to the symbol interleaver logic **58** of the transmitter. The de-interleaved symbols are then demodulated or de-mapped to a corresponding bitstream using de-mapping logic **104.** The bits are then de-interleaved using bit de-interleaver logic **106,** which corresponds to the bit interleaver logic **54** of the transmitter architecture. The de-interleaved bits are then processed by rate de-matching logic **108** and presented to channel decoder logic **110** to recover the initially scrambled data and the CRC checksum. Accordingly, CRC logic **112** removes the CRC checksum, checks the scrambled data in traditional fashion, and provides it to the de-scrambling logic **114** for de-scrambling using the known base station de-scrambling code to re-produce the originally transmitted data as data **116.**

Still referring to Figure **6****,** in parallel with recovering the data **116,** a CQI, or at least information sufficient to create a CQI at each of the base stations **141, 143, 144, 145, 147, 148,** and **149,** is determined and transmitted to each of the base stations. As noted above, the CQI may be a function of the carrier-to-interference ratio (CR), as well as the degree to which the channel response varies across the various sub-carriers in the OFDM frequency band. For this embodiment, the channel gain for each sub-carrier in the OFDM frequency band being used to transmit information is compared relative to one another to determine the degree to which the channel gain varies across the OFDM frequency band. Although numerous techniques are available to measure the degree of variation, one technique is to calculate the standard deviation of the channel gain for each sub-carrier throughout the OFDM frequency band being used to transmit data.

In some embodiments, the relay stations may operate in a time division manner using only one radio, or alternatively include multiple radios.

### Active sets

Referring back to Figure **1****,** each of the base stations **141, 143, 144, 145, 147, 148,** and **149** generally has a plurality of neighbor base stations, which are generally base stations having adjacent cells. Referring to Figure **1** as an example, the base station **143** has neighbor base stations **141, 144, 145, 147, 148,** and **149.**

The mobile stations **161, 162, 163, 164,** and **165** each define, from time to time, a respective active set of base stations and/or relay stations, and in the embodiment shown the respective active sets include one or more of the base stations **141, 143, 144, 145, 147, 148,** and **149** and/or one or more of the relay stations **15** under the control of a respective base station. In the embodiment shown, each of these active sets includes an anchor base station, with which the mobile station is in communication as described above. Further, these active sets may include none, some, or all of the neighbor base stations of the anchor base station, and thus such an active set generally includes the anchor base station and a subset of the neighbor base stations of the anchor base station. For example, in the embodiment shown, the mobile station **161** may have an active set including only the base station **141,** and the mobile station **162** may have an active set including the base stations **141** and **145.** As another example, the neighbor base stations of the mobile station **163** could be the base stations **141, 143,** and **145** and one or more relay stations **15,** but due to signal propagation conditions or other circumstances, the mobile station **163** may only include the base stations **141** and **143** in its active set. In alternative embodiments, active sets may exclude the anchor base stations but include none, some, or all of the neighbor base stations of the anchor base station and/or one or more relay stations.

When one of the mobile stations **161, 162, 163, 164,** and **165** enters one of the cells **121, 123, 124, 125, 127, 128,** or **129,** such as when the mobile station is powered on or enters the region defined by the cells **121, 123, 124, 125, 127, 128,** and **129,** for example, the mobile station initiates communication with one of the base stations **141, 143, 144, 145, 147, 148,** and **149** that is within communication range of the mobile station, which base station is the initial anchor base station of the mobile station in the embodiment shown. At this time, the anchor base station transmits, to the mobile station, information including preamble indices of the neighbor base stations of the anchor base station, to permit the mobile station to identify each of the neighboring base stations and measure signal strengths thereof, for example.

In the embodiment shown, the anchor base station transmits preamble indices of each of its neighbor base stations to the mobile station using a preamble index message (**190,** as discussed below). Referring to Figure **1** as an example, the base station **143** transmits preamble indices of its neighbor base stations **141, 144, 145, 147, 148,** and **149** to the mobile station using the preamble index message (**190**).

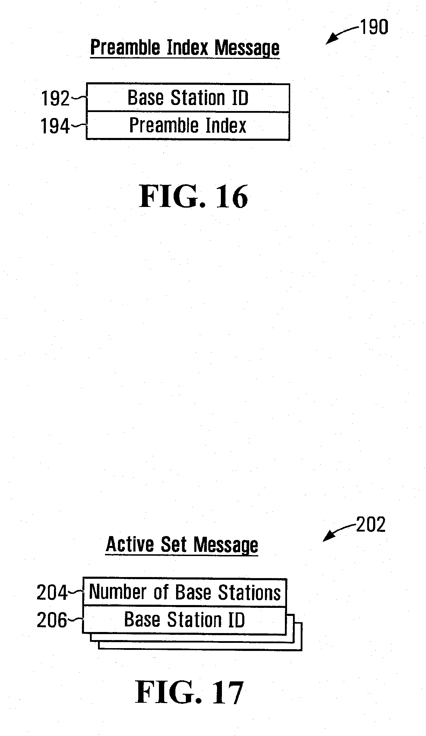

Referring to Figure **16****,** an exemplary preamble index message is shown generally at **190.** The preamble index message **190** includes a base station identifier field **192** for storing an identifier of a base station, and a preamble index field **194** for storing a preamble index of the base station identified by the base station identifier field **192.** In the embodiment shown, when the mobile station **161, 162, 163, 164,** or **165** enters the network illustrated in Figure 1, one of the base stations **141, 143, 144, 145, 147, 148,** and **149** acting as an anchor base station transmits a preamble index message **190** for each of the base stations **141, 143, 144, 145, 147, 148,** and **149** that is a neighbor to the anchor base station. More generally, the anchor base station in the embodiment shown transmits, to a mobile station that joins a network for the anchor base station, a preamble index message **190** for every base station neighboring the anchor base station. These messages may be in the same or different OFDM frames in accordance with the IEEE 802.16e Standard. In other embodiments, the preamble indices of various base stations may be combined into a single message.

Referring back to Figure **15****,** the data memory **184** includes a preambles store **196** for storing preamble indexes and associated base station identifiers received in preamble index messages **190** (shown in Figure **16**), and the control system **32** stores, in the preambles store **196,** preamble indices that the mobile station **161** receives in various preamble index messages (**190**) from time to time.

Still referring to Figure **15****,** the program memory **182** includes codes for an active set manager **198** for determining which base stations identified by base station identifiers in the preambles store **196** to maintain in an active set of base stations for the mobile station **161,** and to store a list of base station identifiers of the base stations in the active set in an active set store **200** in the data memory **184.** Criteria applied by the active set manager **198** differ in various embodiments, but generally include one or more of base station signal condition, set members recommended by the anchor base station, services offered by a base station, and network operator of the base station, for example. As base stations in the active set of the mobile station **161** change from time to time, the mobile station **161** notifies the anchor base stations of the base stations in the active set by sending active set signals, including active set messages (**202,** as discussed below), to the anchor base station.

Referring to Figure **17****,** an example active set message is shown generally at **202.** The active set message **202** includes a number of base stations field **204** for storing a number of base stations in an active set, and one or more base station identifier fields **206** in a number equal to the number stored in the number of base stations field **204.** In the embodiment shown, the mobile station **161** transmits an active set message **202** to the anchor base station (such as the base station **141**) when the base stations in the active set of the mobile station **161** change. In alternative embodiments, the mobile station **161** may transmit to the anchor base station a MOB_BSHO-RSP message (defined in the IEEE 802.16e Standard), using the diversity set fields in such a message, to communicate the active set to the anchor base station.

Referring back to Figure **14****,** the data memory **174** includes an active set store **208** for storing lists of active sets of the various mobile stations **161, 162, 163, 164,** and/or **165** for which the base station **141** acts as the anchor base station, and the control system **20** stores, in the active set store **208,** lists of active sets that the base station **141** receives in various active set messages (**202**) from time to time.

### System Configuration Information Distribution

Still Referring to Figure **14****,** the data memory **174** includes a system configuration information (SCI) store **210** for storing system configuration information of the base station **141,** and of the neighbor base stations of the base station **141,** which neighbor base stations in the embodiment shown are the base stations **143, 145,** and **147.** Different types of system configuration information may be stored in various embodiments, but in the embodiment shown, the system configuration information stored in the system configuration information store **210** includes, for the base station **141** and for each neighbor base station **143, 145,** and **147:** an identifier of the base station; a preamble index of the base station; uplink channel information of the base station; and downlink channel information of the base station. However, in alternative embodiments, the system configuration information of a base station may include one or more of the following: an identifier of the base station; an identifier of a preamble index of the base station; an identifier of a subchannel index of the base station; frequency assignment information for the base station; a time/frequency synchronization indicator associated with the base station; uplink channel information for the base station; downlink channel information for the base station; a trigger reference indicator associated with the base station; the equivalent isotropically radiated power of the base station; handover information for the base station; scheduling service information for the base station; supported mobility feature information for the base station; a paging group identifier associated with the base station; an identifier of channel bandwidth of the base station; an identifier of a cyclic prefix of the base station; an identifier of frame duration of the base station; an identifier of a fast-Fourier transform size of the base station; and an operation mode of the starting subchannelization of a frame and channel number of the base station.

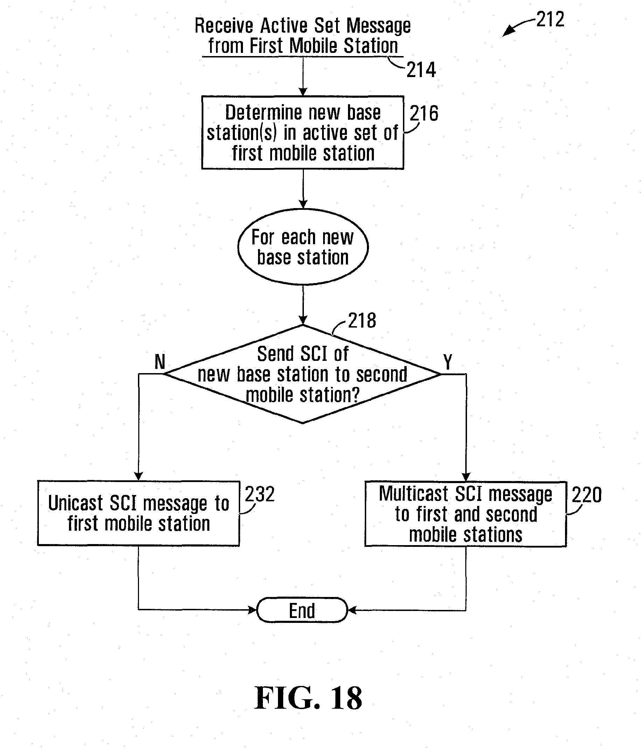

Still referring to Figure **14****,** the program memory **172** includes codes for a system configuration information distributor **212.** Referring to Figure **18****,** the system configuration information distributor **212** is illustrated schematically, and begins at **214** in response to receiving an active set message **202** (shown in Figure **17**) from one of the mobile stations **161, 162, 163, 164,** and **165** (referred to below and in Figure **18** as the "first mobile station").

The system configuration information distributor **212** continues at block **216,** which directs the microprocessor **170** (shown in Figure **14**) to compare the base stations identified by the base station identifier fields **206** in the active set message **202** (shown in Figure **17**) received from the first mobile station to the active set list stored in the active set store **208** (shown in Figure **14**) for the first mobile station, and to determine what new base stations, if any, have been added to the active set of the first mobile station.

The system configuration information distributor **212** proceeds to block **218** for each new base station in the active set of the first mobile station as identified at block **216.** Block **218** directs the microprocessor **170** (shown in Figure **14**) to determine whether the system configuration information of the new base station in the active set of the first mobile station should also be sent to one of the mobile stations **161, 162, 163, 164,** and **165** other than the first mobile station (referred to below and in Figure **18** as the "second mobile station"). By way of background, the system configuration information distributor **212** may be executed asynchronously, and therefore the base station **141** may receive respective active set messages **202** (shown in Figure **17**) from the first and second mobile stations, and those active set messages may include the same new base station in the respective sets of the first and second mobile stations. The microprocessor (shown in Figure **14**) may reach the codes at block **218** in response to the active set message (**202**) from the first mobile station before reaching block **218** in response to the active set message (**202**) from the second mobile station. In such a circumstance, at block **218,** the microprocessor (**170**) determines that the system configuration information of the new base station may be sent both to the first and second mobile stations. In that case, the system configuration information distributor **212** continues at block **220,** which directs the microprocessor (**170**) to multicast, in response to receiving the active set messages (**202**) from the first and second mobile stations, a system configuration signal including a system configuration message (**222,** as discussed below) to the first and second mobile stations. The system configuration information distributor **212** then ends.

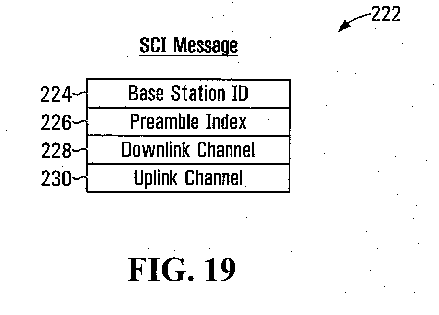

Referring to Figure **19****,** an exemplary system configuration information message is shown generally at **222,** and generally includes the system configuration information stored in the system configuration information store **210** (shown in Figure **14**) for the new base station in the active set of the mobile station. In the embodiment shown, the system configuration information message includes a base station identifier field **224,** a preamble index field **226,** a downlink channel field **228,** and an uplink channel field **230.** However, in various embodiments, the system configuration information message **222** may include different information, and in some embodiments may include the information distributed in a MOB_NBR-ADV message as defined in the IEEE 802.16e Standard, for example.

Referring back to Figure **18****,** if at block **218** the microprocessor (**170**) determines that the system configuration information of the new base station need not be sent to any second mobile station, then the system configuration information distributor **212** continues at block **232,** which directs the microprocessor (**170**) to transmit, to the first mobile station, a system configuration information signal including a system configuration information message **222** (shown in Figure **19**) to the first mobile station. The system configuration information distributor **212** then ends.

Referring back to Figure **15****,** the data memory **184** includes a system configuration information store **233** for storing system configuration information received from system configuration information messages **222** (shown in Figure **19**), and the control system **32** stores, in the system configuration information store **233,** system configuration information that the mobile station **161** receives in various system configuration information messages (**222**) from time to time.

In general, the system configuration information distributor **212** only transmits, to a mobile station, system configuration information of a base station when the base station is added to an active set of the mobile station, and this method of distributing system configuration information of a base station may be more efficient than other protocols for distributing system configuration information.

### Control Channels

In OFDM modulation and other modulation techniques, a control channel may be established for transmitting control messages between mobile stations (such as the mobile stations **161, 162, 163, 164,** and **165,** shown in Figure **1****,** for example) and base stations (such as the base stations **141, 143, 144, 145, 147, 148,** and **149** shown in Figure **1****,** for example). Examples of such control messages include the preamble index message **190** (shown in Figure **16**), the active set message **202** (shown in Figure **17**), and the system configuration information message **222** (shown in Figure **19**)**.** Other examples of such control messages include MAC messages defined in the IEEE 802.16e Standard.

Referring back to Figures **14** and **15****,** the base station **141** and the mobile station **161** in the embodiment shown can operate either in a single control channel mode or a multiple control channel mode. Accordingly, the data memory **174** includes a control channel mode store **234** for storing an indicator of whether the base station **141** is in the single control channel mode or in the multiple control channel mode, and the data memory **184** includes a control channel mode store **236** for storing an indicator of whether the mobile station **161** is in the single control channel mode or in the multiple control channel mode. The control channel mode stores **234** and **236** may be preconfigured, or may be configured from time to time to change the control channel modes of the base station **141** and the mobile station **161.**

Referring back to Figure **14****,** the program memory **172** includes codes for a power controller **238.** The power controller **238** in the embodiment shown may be executed in respect of one of the mobile stations **161, 162, 163, 164,** and **165** for which the base station **141** is the anchor base station. When the base station **141,** and the mobile station in respect of which the power controller **238** is executed, are in the single control channel mode, the power controller **238** controls a power level of that mobile station over the uplink control channel.

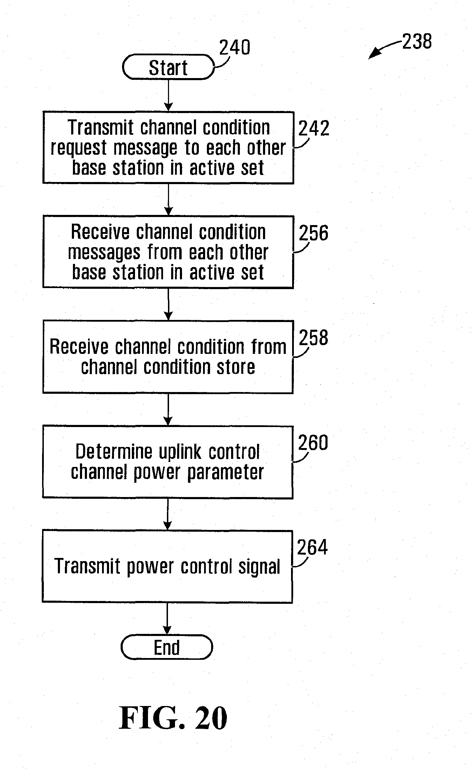

Referring to Figure **20****,** the codes of the power controller **238** are illustrated schematically, and begin at **240.** The power controller **238** may be executed periodically, or may be executed in response to encountering a problem with a power level used by a mobile station on the uplink control channel, such as signal interference or poor reception of control messages, for example.

The power controller **238** continues at block **242,** which directs the microprocessor **170** (shown in Figure **14**) to retrieve, from the active set store **208** (shown in Figure **14**), identifiers of the base stations in the active set of the mobile station in respect of which the power controller **238** is executed, and to transmit a channel condition request message (**244,** as discussed below) to each base station in the active set of the mobile station in respect of which the power controller **238** is executed.

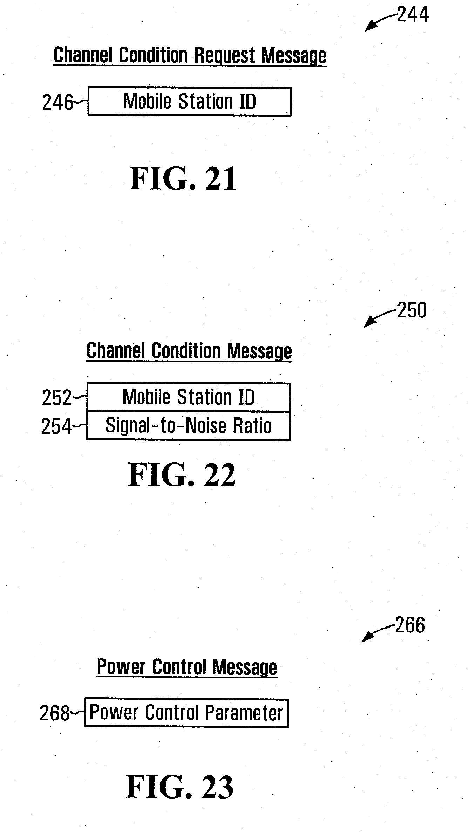

Referring to Figure **21****,** an exemplary channel condition request message is shown generally at **244,** and includes a mobile station identifier field **246** identifying the mobile station in respect of which the power controller **238** is executed.

Referring back to Figure **14****,** the data memory **174** includes a channel condition store **248** for storing condition values representing channel conditions of control signals received by the base station **141** from various ones of the mobile stations **161, 162, 163, 164,** and **165.** The base station **141** periodically updates values in the channel condition store **248** to maintain periodically updated channel condition values reflecting, in the embodiment shown, signal-to-noise ratios for various ones of the mobile stations **161, 162, 163, 164,** and **165** as measured at the base station **141** from time to time.

When one of the base stations **141, 143, 144, 145, 147, 148,** and **149** receives a condition request message **244** (shown in Figure **21**) from another one of the base stations **141, 143, 144, 145, 147, 148,** and **149,** the base station that received the condition request message (**244**) returns, to the base station that sent the condition request message (**244**), a channel condition signal including a channel condition message (**250,** as discussed below).

Referring to Figure **22****,** an exemplary channel condition message is shown generally at **250.** The channel condition message **250** includes a mobile station identifier field **252,** which includes the mobile station identifier from the mobile station identifier field **246** of the channel condition request message **244** (shown in Figure **21**) that the channel condition message **250** is responding to. The channel condition message **250** also includes a signal-to-noise ratio field **254** for storing a signal-to-noise ratio value of the mobile station identified by the mobile station identifier field **252** from the channel condition store **248** (shown in Figure **14**).

Referring back to Figure **20****,** the power controller **238** continues at block **256,** which directs the microprocessor **170** (shown in Figure **14**) to receive the channel condition messages **250** (shown in Figure **22**) from each base station, other than the base station executing the power controller **238,** in the active set of the mobile station in respect of which the power controller **238** is executed.

The power controller **238** continues at block **258,** which directs the microprocessor **170** (shown in Figure **14**) to receive the channel condition of the mobile station in respect of which the power controller **238** is executed from the channel condition store **248** of the base station **141.** Therefore, the codes at blocks **256** and **258** collectively cause the microprocessor (**170**) to receive channel condition signals from all of the base stations in the active set of the mobile station in respect of which the power controller **238** is executed.

The power controller **238** continues at block **260,** which directs the microprocessor (**170**) to determine an uplink control channel power parameter for the mobile station in respect of which the power controller **238** is executed. In the embodiment shown, the data memory **174** includes a channel condition threshold store **262** (shown in Figure **14**) storing a threshold signal-to-noise ratio, which is a minimum preferable signal-to-noise ratio for receiving control signals from a mobile station. In the embodiment shown, the codes at block **260** direct the microprocessor (**170**) to determine a lowest one of the signal-to-noise ratio levels received at blocks **256** and **258** from the base stations in the active set in respect of which the power controller **238** is executed, and to calculate a ratio of: the threshold signal-to-noise ratio stored in the channel condition threshold store (**262**); and the lowest one of the signal-to-noise ratio levels received at blocks **256** and **258.** Therefore, in the embodiment shown, the uplink control channel power parameter is a scaling factor that would be required of the power level at the mobile station in respect of which the power controller **238** is executed in order for control signals from that mobile station to be received at all of the base stations in the active set of that base station with a signal-to-noise ratio of at least the threshold signal-to-noise ratio stored in the channel condition threshold store **262.**

Referring back to Figure **20****,** the power controller **238** continues at block **264,** which directs the microprocessor (**170**) to transmit, to the mobile station in respect of which the power controller **238** is executed, a power control signal including a power control message (**266,** as discussed below). The power controller **238** then ends.

Referring to Figure **23****,** an exemplary power control message is illustrated generally at **266,** and includes a power control parameter field **268** for storing the power control parameter determined at block **260** (shown in Figure **20**)**.**

Referring back to Figure **15****,** the data memory **184** includes a control channel power store **270** for storing a power level for transmitting control signals on the uplink control channel when the control channel mode of the mobile station **161** is the single channel mode. In response to receiving a power control message **266,** the mobile station **161** in the embodiment shown adjusts the control channel power stored in the control channel power store **270** by multiplying the control channel power in the control channel power store **270** by the power control parameter in the power control parameter field **268** (shown in Figure **23**). Therefore, in the embodiment shown, if the power control parameter is greater than 1, then the control channel power in the control channel power store **270** is increased by the scaling factor represented in the power control parameter, and if the power control parameter is less than one, then the control channel power in the control channel power store **270** is decreased by the scaling factor represented in the power control parameter.

The power controller **238** causes transmission to a mobile station of a single parameter usable by the mobile station to facilitate reception of control messages sent by the mobile station at all of the base stations in the active set of the mobile station, advantageously reducing processing time at the mobile station or additional transmissions involving the mobile station that may be required in known protocols for power control.

### Multiple Control Channel Mode

Referring back to Figure **14****,** the program memory **172** includes codes for a control channel allocator **272.** If the control channel mode store **234** indicates that the control channel mode is the multiple control channel mode, the microprocessor **170** executes the control channel allocator **272** to allocate, for one of the mobile stations **161, 162, 163, 164,** or **165,** a respective control channel for each base station in the active set of the mobile station.

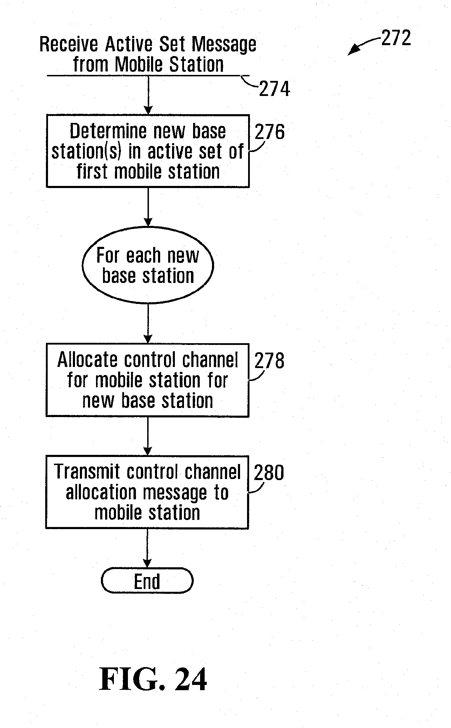

Referring to Figure **24****,** the control channel allocator **272** is illustrated schematically, and begins at **274,** when the control channel mode store (**234**) indicates that the control channel mode is the multiple control channel mode, in response to receiving an active set message **202** (shown in Figure **17**) from a mobile station.

The control channel allocator **272** continues at block **276,** which directs the microprocessor **170** (shown in Figure **14**) to determine what new base stations, if any, have been added to the active set of the mobile station that sent the active set message (**202**) received at **274,** and therefore the codes at block **276** are substantially the same as the codes at block **216** shown in Figure **18****.**

Still referring to Figure **24****,** the control channel allocator **272** executes blocks **278** and **280** for each new base station identified at block **276.** The codes at block **280** allocate a control channel from among a plurality of available control channels for the mobile station to transmit uplink control signals to the new base station in the active set of the mobile station, and the codes at block **280** cause the microprocessor (**170**) to transmit a control channel allocation message (**282,** as discussed below) to the mobile station.

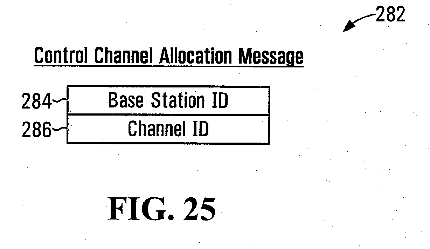

Referring to Figure **25****,** an exemplary control channel allocation message is shown generally at **282,** and includes a base station identifier field **284** for storing an identifier of the new base station added to the active set of the mobile station, and a channel identifier field **286** for storing an identifier of a channel allocated to the mobile station for transmitting uplink control signals to the base station identified by the base station identifier in the base station identifier field **284.**

Referring back to Figure **24****,** once the control channel allocator **272** has executed the blocks **278** and **280** for each new base station identified at block **276,** the control channel allocator **272** ends.

Referring back to Figure **15****,** the data memory **184** includes a control channel allocation store **288** for storing control channel allocations as received in control allocation messages **282** (shown in Figure **25**), and the control system **32** stores, in control channel allocation store **288,** control channel allocations as received in control allocation messages (**282**) from time to time.

Still referring to Figure **15****,** the program memory **182** includes codes for an uplink controller **290** for controlling transmission of uplink control commands when the control mode store **236** indicates that the control channel mode is the multiple control channel mode.

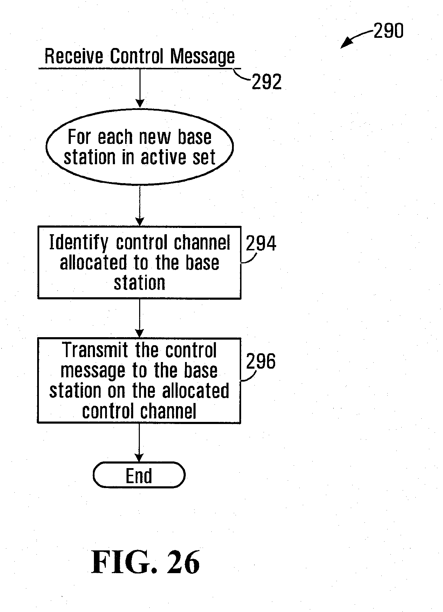

Referring to Figure **26****,** the uplink controller **290** is illustrated schematically, and begins at **292** in response to receiving a control message. The control message received at **292** may be any control message to be transmitted from the mobile station **161** to the base stations in the active set of the mobile station **161,** such as conventional MAC messages, for example.

For each base station in the active set (as identified in the active set store **200** shown in Figure **15**), the uplink controller **290** executes the codes at blocks **294** and **296.** The codes at block **294** direct the microprocessor **180** (shown in Figure **15**) to identify a control channel allocated to the base station as identified in the control channel allocation store **288.** The codes at block **296** direct the microprocessor (**180**) to transmit the control message to the base station on the allocated control channel identified by the codes at block **294.** The uplink controller **290** then ends.

Advantageously, the mobile station **161** may determine respective power levels for each of the control channels identified in the control channel allocation store **288,** and these respective power levels may be adapted to particular circumstances such as distance, noise conditions, and other interference, for example, associated with each one of the base stations in the active set of the mobile station **161.** Therefore, the various control channels identified in the control channel allocation store **288** facilitate sending control channels at respective power levels that may be identified for each of the base stations in an active set.

### Ranging

Referring to Figure **1****,** as indicated above, a mobile station **161, 162, 163, 164,** or **165** may acquire data representing distances between the mobile station and one or more of the base stations **141, 143, 144, 145, 147, 148,** and **149,** in an active set of the mobile station. Because a mobile station is generally different distances from the base stations in the active set of the mobile station, uplink signals from the mobile station travel different distances before reaching the various base stations in the active set, and therefore arrive at the various base stations in the active set at different times. Such differences of time may cause interference, for example, as a signal from one mobile station may arrive at a base station earlier or later than intended, thereby interfering with a preceding or succeeding signal from another mobile station, for example.

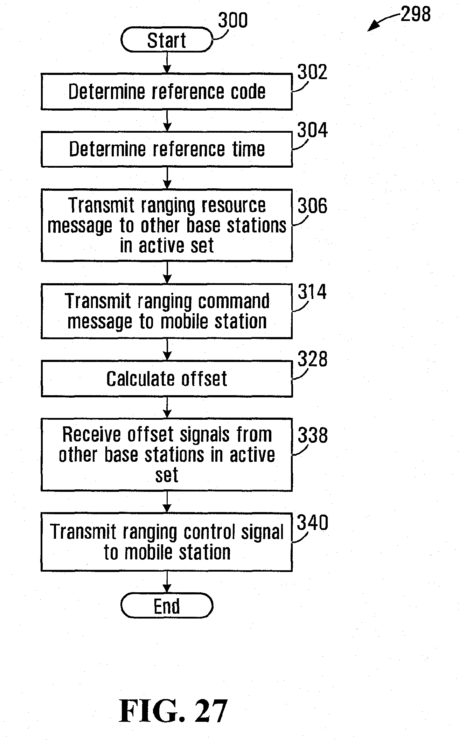

Referring to Figure **14****,** the program memory **172** includes codes for a ranging initiator **298** that may be executed in respect of a mobile station for which the base station **141** is the anchor base station. Referring to Figure **27****,** the ranging initiator **298** is illustrated schematically, and begins at **300.** The ranging initiator **298** may be executed periodically by the microprocessor **170** (shown in Figure **14**), or may be executed in response to an indication that a mobile station requires new or updated ranging information because the mobile station has added a new base station to its active set or because the mobile station has repeatedly caused interference with signals from other mobile stations, for example.

The ranging initiator **298** continues at block **302,** which directs the microprocessor **170** (shown in Figure **14**) to determine a reference code (which may also be referred to as a "ranging code"). In the embodiment shown, the reference code generated at block **302** is a pseudo-random binary number, although in other embodiments, the reference code may be a predetermined code for each mobile station, for example.

The ranging initiator **298** continues at block **304,** which directs the microprocessor (**170**) to determine a reference time for the mobile station to transmit a signal including the reference code determined at block **302.** As discussed above with reference to Figures **14** and **15****,** the clocks **176** and **186** of the base station **141** and the mobile station **161** respectively, and the corresponding clocks of the base stations **143, 144, 145, 147, 148,** and **149** and of the mobile stations **162, 163, 164,** and **165,** are synchronized in the embodiment shown, and these clocks define sequential frames in time for transmission of data. The codes at block **304** direct the microprocessor (**170**) to determine a reference time, which in the embodiment shown is a particular OFDM frame as determined by the aforementioned synchronized clocks.

Still referring to Figure **27****,** the ranging initiator **298** continues at block **306,** which directs the microprocessor (**170**) to transmit a ranging resource signal including a ranging resource message (**308,** as discussed below) to the other base stations in the active set of the mobile station in respect of which the ranging initiator **298** is executed.

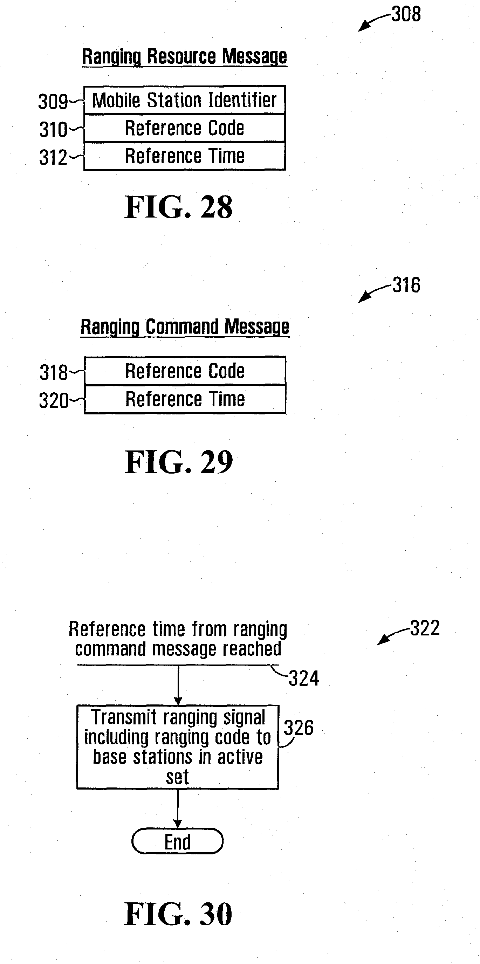

Referring to Figure **28****,** an exemplary ranging resource message is shown generally at **308.** The ranging resource message **308** includes a mobile station identifier field **309** for storing an identifier of the mobile station in respect of which the ranging initiator **298** is executed, a reference code field **310** for storing the reference code determined at block **302** (shown in Figure **27**), and a reference time field **312** for storing the reference time determined at block **304** (shown in Figure **27**)**.**

Referring back to Figure **27****,** the ranging initiator **298** continues at block **314,** which directs the microprocessor (**170**) to transmit a ranging command signal including a ranging command message **(316,** as discussed below) to the mobile station in respect of which the ranging initiator **298** is executed.

Referring to Figure **29****,** an exemplary ranging command message is shown generally at **316.** The ranging command message **316** includes a reference code field **318** for storing the reference code determined at block **302** (shown in Figure **27**), and a reference time field **320** for storing the reference time determined at block **304** (shown in Figure **27**)**.**

Referring back to Figure **15****,** the program memory **182** includes codes for a ranger **322.** Referring to Figure **30****,** the ranger **322** is illustrated schematically, and begins at **324** when the reference time specified by the reference time field **320** of the ranging command message **316** (illustrated in Figure **29**) received at the mobile station **161** is reached. The ranger **322** continues at block **326,** which directs the microprocessor **180** (shown in Figure **15**) to transmit a ranging signal, including the reference code specified by the reference code field **318** of the ranging command message **316** (shown in Figure **29**), to the base stations in the active set of the mobile station **161.** The ranger **322** then ends. In alternative embodiments, the ranger **322** may begin at a particular time interval before the reference time specified by the reference time field (**320**) in order to cause the ranging signal to be received at the base stations in the active set of the mobile station 161 closer in time to the reference time specified by the reference time field (320). This particular time interval may, for example, reflect anticipated signal transmission time based on estimated distances to the base stations in the active set, or based on previously acquired data reflecting such distances.

The base stations in the active set of the mobile station 161 therefore receive the ranging signal, including the ranging code, transmitted in response to the codes of block **326,** and these base stations each receive the ranging signal at a respective time. Referring back to Figure **27****,** the ranging initiator **298** continues at block **328,** which directs the microprocessor **170** (shown in Figure **14****)** to calculate a difference in time between the reference time determined at block **304** and the time when the base station **141** received the ranging signal transmitted from the mobile station in response to the codes at block **326** (shown in Figure **30**)**.**

The other base stations in the active set of the mobile station **161** also calculate respective differences in time between the reference time and the respective time when the base station in the active set received the ranging signal in response to the codes at block 326 (illustrated in Figure **30**), and those other base stations transmit to the base station **141** respective offset signals including respective offset messages (**330,** as discussed below) identifying the respective difference in time calculated at that base station.

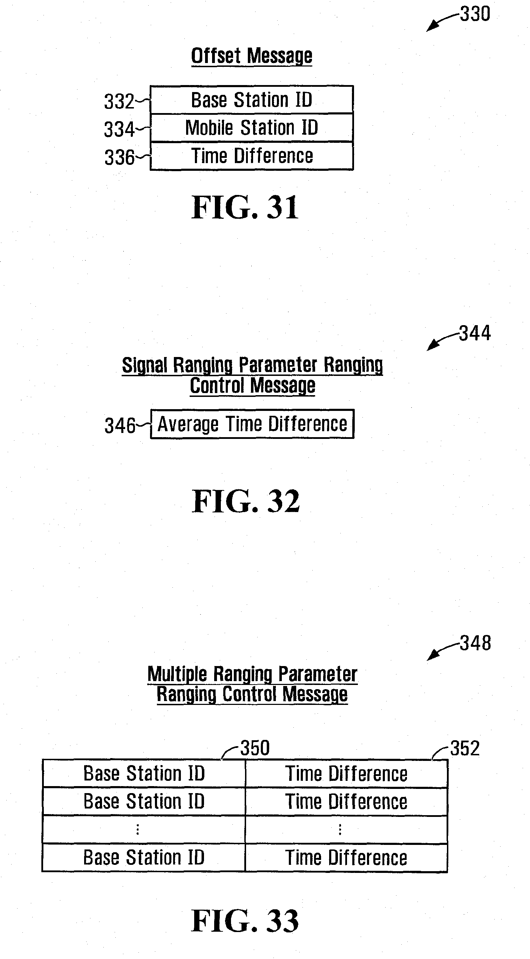

Referring to Figure **31****,** an exemplary offset message is shown generally at **330,** and includes a base station identifier field **332** identifying the base station at which the time difference was calculated, a mobile station identifier field **334** identifying the mobile station in respect of which the time difference was calculated, and a time difference field **336** identifying the time difference calculated as described above.

Referring back to Figure **27****,** the ranging initiator **298** continues at block **338,** which directs the microprocessor **170** (shown in Figure **14**) to receive the various offset messages **330** (shown in Figure **31**) from the other base stations in the active set of the mobile station in respect of which the ranging initiator **298** is executed. The ranging initiator **298** then continues at block **340,** which directs the microprocessor (**170**) to transmit a ranging control signal including a ranging control message (**344** or **348,** as discussed below) to the mobile station in respect of which the ranging initiator **298** is executed.

Referring back to Figure **14****,** the data memory **174** includes a ranging mode store **342** for storing an indicator of a ranging mode of the base station **141.** The ranging mode indicated by the ranging mode store **342** in the embodiment shown may be a single ranging parameter mode or a multiple ranging parameter mode. The ranging mode identified by the ranging mode store **342** may be preconfigured, or may alternatively be configured from time to time.

Referring to Figure **32****,** a single ranging parameter ranging control message is shown generally at **344,** and includes an average time difference field **346.** When the ranging mode store (**342**) indicates the single ranging parameter ranging mode, the codes at block **340** direct the microprocessor **(170)** to calculate an average of the time differences received in blocks **328** and **338** (shown in Figure **27**), store the average in the average time difference field **346** of the single ranging parameter ranging control message **344,** and transmit the single ranging parameter ranging control message **344** to the mobile station in respect of which the ranging initiator **298** is executed.

Alternatively, when the ranging mode store **342** indicates a multiple ranging parameter ranging mode, the codes at block **340** (shown in Figure **27**) direct the microprocessor (**170**) to generate a multiple ranging parameter ranging control message, and an exemplary multiple parameter ranging control message is shown generally at **348** in Figure **33****.** Referring to Figure **33****,** the multiple ranging parameter ranging control message **348** includes at least one base station identifier **350** identifying each of the base stations in the active set of the mobile station in respect of which the ranging initiator **298** is executed, and a plurality of time difference fields **352,** each time difference field corresponding to one of the base station identifiers **350** and storing the time difference associated with the base station as received in blocks **328** and **338** (shown in Figure **27**)**.** When the ranging mode store **342** indicates a multiple ranging parameter ranging mode, the codes at block **340** (shown in Figure **27**) direct the microprocessor (**170**) to generate a multiple ranging parameter ranging control message **348** and transmit the multiple ranging parameter ranging control message **348** to the mobile station in respect of which the ranging initiator **298** is executed.

As indicated above, in alternative embodiments, active sets may exclude the anchor base stations but include none, some, or all of the neighbor base stations of the anchor base station and/or one or more relay stations. In these embodiments, the codes at block **328** may be omitted, and the codes at block **340** would exclude the time differences received at block **328.**

Referring back to Figure **15****,** the data memory **184** includes a ranging data store **354** for storing ranging data received from ranging control messages **(344** and **348)** transmitted at block **340** (shown in Figure **27**)**.** The mobile station **161** refers to ranging data in the ranging data store **354** to facilitate transmission of uplink signals to be received at various base stations in the active set of the mobile station **161** at times based on the ranging data, to facilitate arrival of the signals close to times that may be assigned, thereby avoiding interference with uplink signals from other mobile stations. Advantageously, the process described above maintains periodically updated ranging data in the ranging data store **354** of the mobile station **161** for the base stations that the mobile station **161** has identified for its active set in the active set store **200,** thereby facilitating efficient handover of the mobile station from an anchored base station to a target base station within the active set of base stations.

### Handover Acknowledgment

Referring back to Figure **1****,** as indicated above, one of the mobile stations **161, 162, 163, 164,** and **165** may, from time to time, initiate a handover from its anchor base station to another one of the base stations. In various embodiments, different criteria may be involved in the determination of when a mobile station will initiate a handover from its anchor base station to a target base station, but these criteria often include relative signal strength of the anchor base station and the target base station, services available from the anchor base station and the target base station, wireless operators of the anchor station and the target base station, and recommended target base stations transmitted by the anchor base station, for example. In one embodiment according to the IEEE 802.16e Standard, mobile stations and base stations exchange various control messages, such as MOB_BSHO-REQ, MOB_MSHO-REQ, MOB_BSHO-RSP, and MOB_HO-IND messages to communicate information and determinations regarding handovers.

Referring back to Figure **15****,** the program memory **182** includes codes for a handover handler **356** generally for making determinations of when to initiate a handover from a current anchor base station to a target anchor base station, and for implementing such a determination.

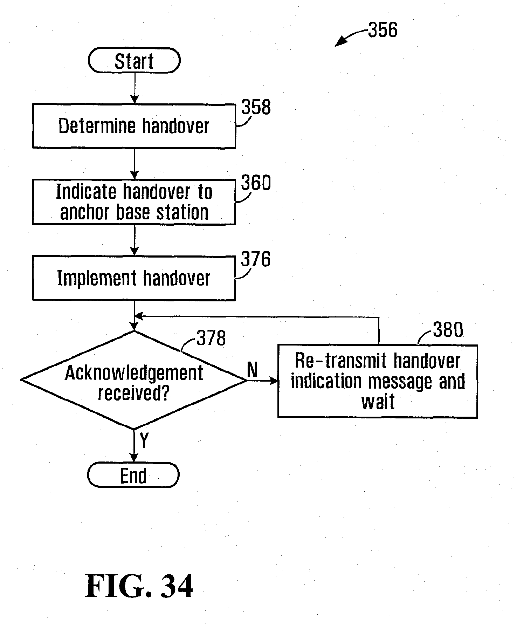

Referring to Figure **34****,** the handover handler **356** is illustrated schematically, and begins at block **358,** which includes codes for directing the microprocessor **180** (shown in Figure **15**) to determine that a handover will be made from an anchor base station of the mobile station **161** to a target base station. The codes at block **358** may implement one or more of the aforementioned criteria or other criteria for determining that a handover will take place.

The handover handler **356** continues at block **360,** which directs the microprocessor (**180**) to transmit, to the anchor base station, a handover indication signal including a handover indication message (**362,** as discussed below) that the handover determined at block **358** will take place.

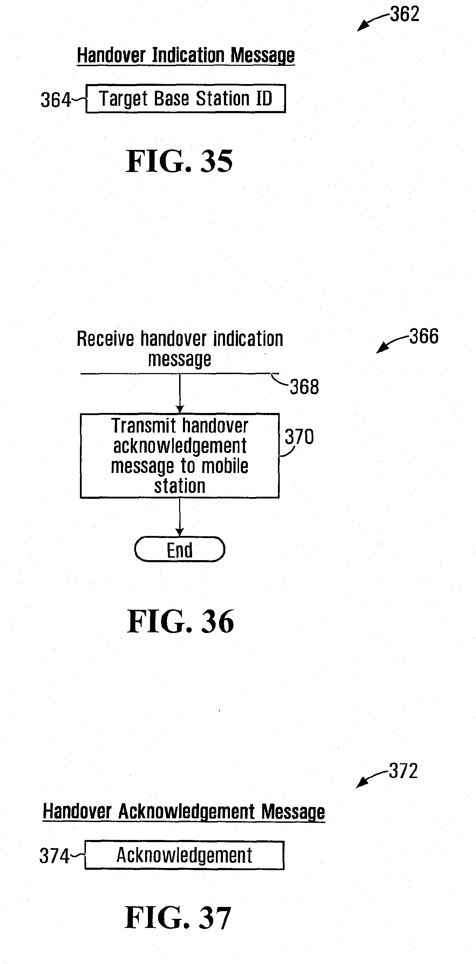

Referring to Figure **35****,** an exemplary handover indication message is shown generally at **362,** and includes a target base station identifier field **364** for storing an identifier of the target base station determined at block **358** (shown in Figure **34**)**.**

Referring back to Figure **14****,** the program memory **172** includes codes for a handover acknowledger **366.** Referring to Figure **36****,** the handover acknowledger **366** is illustrated schematically, and begins at **368** when the base station **141** receives the handover indication message **362** (illustrated in Figure **35**) that was transmitted from the mobile station at block **360** (illustrated in Figure **34**)**.** The handover acknowledger **366** continues at block **370,** which directs the microprocessor **170** (shown in Figure **14**) to transmit a handover acknowledgement signal including a handover acknowledgement message (**372,** as discussed below) to the mobile station sent the handover indication message that was received at **368.**

Referring to Figure **37****,** an exemplary handover acknowledgement message is shown schematically at **372,** and includes an acknowledgment field **374.** In the illustrated embodiment, the acknowledgment field includes a binary flag set to 1 if the handover indication message received at **368** was received without error, and set to 0 if the handover indication message received at **368** was received with some error.

Referring back to Figure **34****,** the handover handler **356** continues at block **376,** which directs the microprocessor **180** (shown in Figure **15**) to implement the handover determined at block **358.** The handover may be implemented by one of many known protocols, such as the protocols established in the IEEE 802.16e Standard, for example.

The handover handler **356** continues at block **378,** which directs the microprocessor (**180**) to determine whether the mobile station **161** has received the handover acknowledgment message **372** (shown in Figure **37**) transmitted by the anchor base station **141** at block **370** (shown in Figure **36**)**.** If so, the handover handler **356** ends. If not, the handover handler **356** continues at block **380,** which directs the microprocessor (**180**) to retransmit the handover indicator message transmitted at block **360,** and to wait a predefined period of time before returning to block **378.** The blocks **378** and **380** thus repeat until the mobile station **161** has confirmed that the base station **141** received a handover indication message. Although the blocks **378** and 380 are executed after the block **376,** the block **376** may be executed after the blocks **378** and **380** in other embodiments, thereby deferring the handover until the acknowledgement from the anchor base station is received. A handover indicator message retransmitted at block **378** may, in some cases, prevent the anchor base station **141** from continuing attempts to communicate with the base station **161** after the base station **161** has completed a handover to the target base station, which may advantageously prevent unnecessary interference and congestion. A handover indicator message retransmitted at block **378** may also ensure that the anchor base station notifies the target base station that the mobile station will perform a handover to the target base station, thereby advantageously preventing a communication interruption that may result if the target base station is not prepared to communicate with the mobile station because the anchor base station did not receive the handover indication message.

While the above provides specific examples of a communication system in which embodiments of the invention are implemented, it is to be understood that embodiments of the invention can be implemented with communications systems having architectures that are different than the specific example provided above, but that operate in a manner consistent with the implementation of the embodiments described herein.

While specific embodiments of the invention have been described and illustrated, such embodiments should be considered illustrative of the invention only and not as limiting the invention as construed in accordance with the accompanying claims.

The invention may be further understood with reference to the following numbered clauses:
1. A method of facilitating a handover of a mobile station from an anchor base station to a target base station, the method comprising:
   receiving, at the anchor base station from the mobile station, a handover indication signal indicating that the mobile station will perform the handover from the anchor base station to the target base station; and
   transmitting, to the mobile station, an acknowledgment signal acknowledging that the anchor base station received the handover indication signal.
2. A base station apparatus comprising:
   an interface for facilitating radio communication with a mobile station; and
   a processor in communication with the interface and operably configured to:
      receive, from the interface, a handover indication signal from the mobile station indicating that the mobile station will perform a handover from the base station apparatus to a target base station; and
      cause the interface to transmit, to the mobile station, an acknowledgment signal acknowledging that the base station apparatus received the handover indication signal.
3. A base station apparatus comprising:
   means for receiving a handover indication signal from a mobile station indicating that the mobile station will perform a handover from the base station apparatus to a target base station; and
   means for transmitting, to the mobile station, an acknowledgment signal acknowledging that the base station apparatus received the handover indication signal.
4. A base station apparatus configured for radio communication with a mobile station and for communication with at least one neighbor base station in an active set in radio communication with the mobile station, the apparatus comprising:
   means for transmitting, to the at least one neighbor base station in the active set, a ranging resource signal identifying a reference code and a reference time associated with the mobile station;
   means for transmitting, to the mobile station, a ranging command signal directing the mobile station to transmit a ranging signal including the reference code to each base station in the active set at a time in response to the reference time, such that each base station in the active set receives the ranging signal at a respective time;
   means for receiving a respective offset signal from each base station in the active set, each respective offset signal identifying a respective difference in time between the reference time and the respective time when the base station in the active set received the ranging signal; and
   means for transmitting, to the mobile station, a ranging control signal in response to each of the respective offset signals.
5. A method of distributing system configuration information of a base station, the method comprising:
   receiving, from a first mobile station having a first active set of base stations, a first active set signal indicating that the first mobile station has added the base station to the first active set; and
   in response to receiving the first active set signal, transmitting, to the first mobile station, a system configuration information signal including the system configuration information of the base station.
6. The method of clause 5 wherein the system configuration information of the base station includes one or more of the information in the group consisting of: an identifier of the base station; an identifier of a preamble index of the base station; an identifier of a subchannel index of the base station; frequency assignment information for the base station; a time/frequency synchronization indicator associated with the base station; uplink channel information for the base station; downlink channel information for the base station; a trigger reference indicator associated with the base station; the equivalent isotropically radiated power of the base station; handover information for the base station; scheduling service information for the base station; supported mobility feature information for the base station; a paging group identifier associated with the base station; an identifier of channel bandwidth of the base station; an identifier of a cyclic prefix of the base station; an identifier of frame duration of the base station; an identifier of a fast-Fourier transform size of the base station; and an operation mode of the starting subchannelization of a frame and channel number of the base station.
7. The method of clause 5 further comprising receiving, from a second mobile station having a second active set of base stations, a second active set signal indicating that the second mobile station has added the base station to the second active set, wherein transmitting the system configuration information signal to the first mobile station comprises multicasting, in response to receiving the first and second indicator signals, the system configuration information signal to the first and second mobile stations.
8. A base station apparatus comprising:
   an interface for facilitating radio communication with a first mobile station having a first active set of base stations;
   a computer-readable memory having a store for storing system configuration information of a plurality of base stations; and
   a processor in communication with the interface and the computer-readable memory, the processor operably configured to:
      receive, from the interface, a first active set signal, from the first mobile station, indicating that the first mobile station has added one of the plurality of base stations to the first active set; and
      cause the interface to transmit to the first mobile station, in response to receiving the first active set signal, a system configuration information signal including the system configuration information of the one of the plurality of base stations.
9. The apparatus of clause 8 wherein the system configuration information of the base station includes one or more of the information in the group consisting of: an identifier of the base station; an identifier of a preamble index of the base station; an identifier of a subchannel index of the base station; frequency assignment information for the base station; a time/frequency synchronization indicator associated with the base station; uplink channel information for the base station; downlink channel information for the base station; a trigger reference indicator associated with the base station; the equivalent isotropically radiated power of the base station; handover information for the base station; scheduling service information for the base station; supported mobility feature information for the base station; a paging group identifier associated with the base station; an identifier of channel bandwidth of the base station; an identifier of a cyclic prefix of the base station; an identifier of frame duration of the base station; an identifier of a fast-Fourier transform size of the base station; and an operation mode of the starting subchannelization of a frame and channel number of the base station.
10. The apparatus of clause 8 wherein:
   the processor is further operably configured to receive, from the interface, a second active set signal, from a second mobile station having a second active set of base stations, indicating that the second mobile station has added the one of the plurality of base stations to the second active set; and
   the processor is further operably configured to cause the interface to multicast, in response to receiving the first and second indicator signals, the system configuration signal to the first and second mobile stations.
11. A base station apparatus comprising:
   means for storing system configuration information of a plurality of base stations;
   means for receiving an active set signal, from a mobile station having an active set, indicating that the mobile station has added one of the plurality of base stations to the active set; and
   means for transmitting to the mobile station, in response to receiving the active set signal, a system configuration information signal including the system configuration information of the one of the plurality of base stations.
12. A method of controlling a mobile station in radio communication over an uplink control channel with a plurality of base stations, the method comprising:
   receiving a respective channel condition signal from each one of the plurality of base stations, each respective channel condition signal indicating a respective channel condition of control signals received from the mobile station over the uplink control channel at the one of the plurality of base stations;
   determining an uplink control channel power parameter in response to the respective channel condition signals; and
   transmitting, to the mobile station, a power control signal including the uplink control channel power parameter.
13. The method of clause 12 wherein each of the channel conditions includes a signal-to-noise ratio.
14. The method of clause 13 wherein determining the uplink control channel power parameter comprises determining a ratio of: a threshold signal-to-noise ratio; and a lowest one of the respective signal-to-noise ratios of the control signals received from the mobile station over the uplink control channel at each one of the plurality of base stations.
15. A base station apparatus comprising:
   a first interface for facilitating radio communication with a mobile station;
   a second interface for facilitating communication with at least one neighbor base station in an active set in radio communication with the mobile station; and
   a processor in communication with the first and second interfaces, the processor operably configured to:
      receive, from the second interface, a respective channel condition signal from each neighbor base station of the active set, each respective channel condition signal indicating a respective channel condition of control signals received from the mobile station over the uplink control channel at the neighbor base station of the active set;
      determine an uplink control channel power parameter in response to: a channel condition of control signals received from the mobile station over the uplink control channel at the apparatus; and the respective channel condition signals received from the at least one neighbor base station of the active set; and
      cause the first interface to transmit, to the mobile station, a power control signal including the uplink control channel power parameter.
16. The apparatus of clause 15 wherein each of the channel conditions includes a signal-to-noise ratio.
17. The apparatus of clause 16 wherein the processor is operably configured to determine the uplink control channel power parameter in response to a ratio of: a threshold signal-to-noise ratio; and a lowest one of: the signal-to-noise ratio of the control signals received from the mobile station over the uplink control channel at the apparatus; and the respective signal-to-noise ratios of the control signals received from the mobile station over the uplink control channel at each neighbor base station of the active set.
18. A base station apparatus configured for radio communication with a mobile station and for communication with at least one neighbor base station in an active set in radio communication with the mobile station, the apparatus comprising:
   means for receiving a respective channel condition signal from each neighbor base station of the active set, each respective channel condition signal indicating a respective channel condition of control signals received from the mobile station over the uplink control channel at the neighbor base station of the active set;
   means for determining an uplink control channel power parameter in response to: a channel condition of control signals received from the mobile station over the uplink control channel at the apparatus; and the respective channel condition signals received from the at least one neighbor base station of the active set; and
   means for transmitting, to the mobile station, a power control signal including the uplink control channel power parameter.
19. A method of transmitting a control signal to a plurality of base stations in an active set of a mobile station, the method comprising:
   for each base station in the active set, transmitting the control signal to the base station on a respective control channel.
20. A mobile station apparatus comprising:
   an interface for facilitating radio communication with a plurality of base stations in an active set of the apparatus; and
   a processor in communication with the interface and operably configured to transmit the control signal to each base station in the active set on a respective control channel.
21. A mobile station apparatus comprising:
   means for facilitating radio communication with a plurality of base stations in an active set of the apparatus; and
   means for transmitting the control signal to each base station in the active set on a respective control channel.

## Claims

1. A method of facilitating acquisition, by a mobile station in radio communication with an anchor base station, of data representing distances between the mobile station and base stations of an active set of base stations in radio communication with the mobile station, the active set including a subset of neighbor base stations of the anchor base station, the method comprising:
transmitting, from the anchor base station to each other base station of the active set, a ranging resource signal identifying a reference code and a reference time associated with the mobile station;
causing the mobile station to transmit a ranging signal including the reference code to each base station of the active set at a time in response to the reference time, such that each base station of the active set receives the ranging signal at a respective time;
receiving, from each base station of the active set, a respective offset signal identifying a respective difference in time between the reference time and the respective time when the base station of the active set received the ranging signal; and
transmitting, to the mobile station, a ranging control signal in response to the respective offset signals.

2. The method of claim **1** further comprising generating the reference code from a pseudo-randomly generated code.

3. The method of claim **1** wherein transmitting the ranging control signal comprises transmitting a ranging control signal representing an average of the respective differences in time between the reference time and the respective times when each base station of the active set received the ranging signal.

4. The method of claim **1** wherein transmitting the ranging control signal comprises transmitting a plurality of ranging control signals, each one of the plurality of ranging control signals associated with a respective base station of the active set and representing the respective difference in time between the reference time and the respective time when the base station of the active set received the ranging signal.

5. The method of claim **1** wherein the active set further includes the anchor base station.

6. A base station apparatus comprising:
a first interface for facilitating radio communication with a mobile station;
a second interface for facilitating communication with at least one neighbor base station in an active set in radio communication with the mobile station; and
a processor in communication with the first and second interfaces, the processor operably configured to:
cause the second interface to transmit, to the at least one neighbor base station in the active set, a ranging resource signal identifying a reference code and a reference time associated with the mobile station;
cause the first interface to transmit, to the mobile station, a ranging command signal directing the mobile station to transmit a ranging signal including the reference code to each base station in the active set at a time in response to the reference time, such that each base station in the active set receives the ranging signal at a respective time;
receive, from the second interface, a respective offset signal from each neighbor base station in the active set, each respective offset signal identifying a respective difference in time between the reference time and the respective time when the neighbor base station in the active set received the ranging signal; and
cause the first interface to transmit, to the mobile station, a ranging control signal in response to each of the respective offset signals.

7. The apparatus of claim **6** wherein the processor is further operably configured to generate the reference code from a pseudo-random ly generated code.

8. The apparatus of claim **6** wherein the ranging control signal represents an average of each of the respective differences in time between the reference time and the respective time when each base station in the active set received the ranging signal.

9. The apparatus of claim **6** wherein the ranging control signal comprises a plurality of ranging control signals, each one of the plurality of ranging control signals associated with a respective one of each base station of the active set, and representing the respective difference in time between the reference time and the respective time when the respective base station received the ranging signal.

10. The apparatus of claim **6** wherein the active set further includes the apparatus, and wherein the processor is further operably configured to:
receive, from the first interface, the ranging signal from the mobile station;
calculate a difference in time between the reference time and a time when the apparatus received the ranging signal from the mobile station; and
cause the first interface to transmit, to the mobile station, the ranging control signal in response to the difference in time between the reference time and the time when the apparatus received the ranging signal from the mobile station.

## Patentansprüche

1. Verfahren zum Vereinfachen des Erhalts von Daten, die Distanzen zwischen der mobilen Station und Basisstationen eines aktiven Satzes von Basisstationen in Funkkommunikation mit der mobilen Station darstellen, durch eine mobile Station in der Funkkommunikation mit einer Ankerbasisstation, wobei der aktive Satz einen Untersatz benachbarter Basisstationen der Ankerbasisstation umfasst, das Verfahren umfassend:
Senden eines Bereichsressourcensignals, das einen Referenzcode und einen Referenzzeitpunkt identifiziert, der mit der mobilen Station verbunden ist, von der Ankerbasisstation an jede andere Basisstation des aktiven Satzes;
Veranlassen, dass die mobile Station ein Bereichssignal, das einen Referenzcode enthält, zu einem Zeitpunkt in Reaktion auf den Referenzzeitpunkt an jede Basisstation des aktiven Satzes übermittelt, sodass jede Basisstation des aktiven Satzes das Bereichssignal zu einem jeweiligen Zeitpunkt erhält;
Erhalt eines jeweiligen Abstandssignals von jeder Basisstation des aktiven Satzes zur Identifizierung einer jeweiligen Zeitdifferenz zwischen der Referenzzeit und der jeweiligen Zeit, zu der die Basisstation des aktiven Satzes das Bereichssignal empfangen hat; und
Senden eines Bereichssteuersignals an die mobile Station in Reaktion auf die jeweiligen Abstandssignale.

2. Verfahren nach Anspruch 1, ferner umfassend das Erzeugen des Referenzcodes aus einem pseudozufällig erzeugten Code.

3. Verfahren nach Anspruch 1, wobei das Senden des Bereichssteuersignals das Senden eines Bereichssignals umfasst, das einen Durchschnitt der jeweiligen Zeitdifferenzen zwischen der Referenzzeit und den jeweiligen Zeiten darstellt, zu denen jede Basisstation des aktiven Satzes das Bereichssignal empfangen hat.

4. Verfahren nach Anspruch 1, wobei das Senden des Bereichssteuersignals das Senden mehrerer Bereichssteuersignale umfasst, wobei jedes der mehreren Bereichssteuersignale mit einer jeweiligen Basisstation des aktiven Satzes verbunden ist und die jeweilige Zeitdifferenz zwischen der Referenzzeit und den jeweiligen Zeiten darstellt, zu denen jede Basisstation des aktiven Satzes das Bereichssignal empfangen hat.

5. Verfahren nach Anspruch 1, wobei der aktive Satz ferner die Ankerbasisstation enthält.

6. Basisstationsvorrichtung, umfassend:
eine erste Schnittstelle zum Vereinfachen der Funkkommunikation mit einer mobilen Station;
eine zweite Schnittstelle zum Vereinfachen der Kommunikation mit mindestens einer benachbarten Basisstation in einem aktiven Satz in Funkkommunikation mit der mobilen Station; und
einen Prozessor in Kommunikation mit den ersten und zweiten Schnittstellen, wobei der Prozessor funktionsfähig konfiguriert ist, um:
die zweite Schnittstelle anzuweisen, ein Bereichsressourcensignal an mindestens eine benachbarte Basisstation in dem aktiven Satz zu senden, das einen Referenzcode und einen Referenzzeitpunkt identifiziert, der mit der mobilen Station verbunden ist;
zu veranlassen, dass die erste Schnittstelle ein Bereichsbefehlssignal an die mobile Station sendet, das die mobile Station anweist, ein Bereichssignal, das einen Referenzcode enthält, an jede Basisstation des aktiven Satzes zu einem Zeitpunkt in Reaktion auf einen Referenzzeitpunkt zu senden, sodass jede Basisstation des aktiven Satzes das Bereichssignal zu einem jeweiligen Zeitpunkt erhält;
von der zweiten Schnittstelle ein jeweiliges Abstandssignal von jeder benachbarten Basisstation in dem aktiven Satz zu erhalten, wobei jedes jeweilige Abstandssignal eine jeweilige Zeitdifferenz zwischen der Referenzzeit und der jeweiligen Zeit identifiziert, zu der die Basisstation des aktiven Satzes das Bereichssignal empfangen hat; und
die erste Schnittstelle zu veranlassen, ein Bereichssteuersignal in Reaktion auf die jeweiligen Abstandssignale an die mobile Station zu senden.

7. Vorrichtung nach Anspruch 6, wobei der Prozessor ferner in Betrieb konfiguriert ist, den Referenzcode aus einem pseudozufällig erzeugten Code zu erzeugen.

8. Vorrichtung nach Anspruch 6, wobei das Bereichssteuersignal einen Durchschnitt jeder der jeweiligen Zeitdifferenzen zwischen der Referenzzeit und den jeweiligen Zeiten umfasst, zu denen jede Basisstation in dem aktiven Satz das Bereichssignal empfangen hat.

9. Vorrichtung nach Anspruch 6, wobei das Bereichssteuersignal mehrere Bereichssteuersignale umfasst, wobei jedes der mehreren Bereichssteuersignale mit einer jeweiligen einen der jeden Basisstationen des aktiven Satzes verbunden ist und die jeweilige Zeitdifferenz zwischen der Referenzzeit und den jeweiligen Zeiten darstellt, zu denen jede jeweilige Basisstation das Bereichssignal empfangen hat.

10. Vorrichtung nach Anspruch 6, wobei der aktive Satz ferner die Vorrichtung enthält und wobei der Prozessor ferner bedienbar konfiguriert ist, um:
von der ersten Schnittstelle das Bereichssignal von der mobilen Station zu empfangen;
eine Zeitdifferenz zwischen der Referenzzeit und einer Zeit, zu der die Vorrichtung das Bereichssignal von der mobilen Station empfangen hat, zu berechnen; und
die erste Schnittstelle zu veranlassen, das Bereichssteuersignal in Reaktion auf die Differenz der Zeit zwischen der Referenzzeit und der Zeit, zu der die Vorrichtung das Bereichssignal von der mobilen Station empfangen hat, an die mobile Station zu senden.

## Revendications

1. Procédé permettant de faciliter l'acquisition, par une station mobile en communication avec une station de base ancre, de données représentant des distances entre la station mobile et des stations de base d'un ensemble actif de stations de base en communication radio avec la station mobile, l'ensemble actif incluant un sous-ensemble de stations de base voisines de la station de base ancre, le procédé comprenant :
la transmission, de la station de base ancre à chaque autre station de base de l'ensemble actif, d'un signal de ressource de télémétrie identifiant un code de référence et un temps de référence associés à la station mobile ;
le fait d'amener la station mobile à transmettre un signal de télémétrie incluant le code de référence à chaque station de base de l'ensemble actif à un temps en réponse au temps de référence, de sorte que chaque station de base de l'ensemble actif reçoive le signal de télémétrie à un temps respectif ;
la réception, en provenance de chaque station de base de l'ensemble actif, d'un signal de décalage respectif identifiant une différence de temps respective entre le temps de référence et le temps respectif lorsque la station de base de l'ensemble actif a reçu le signal de télémétrie ; et
la transmission, à la station mobile, d'un signal de contrôle de télémétrie en réponse aux signaux de décalage respectifs.

2. Procédé selon la revendication 1, comprenant en outre la génération du code de référence à partir d'un code généré de manière pseudo-aléatoire.

3. Procédé selon la revendication 1, dans lequel la transmission du signal de contrôle de télémétrie comprend la transmission d'un signal de contrôle de télémétrie représentant une moyenne des différences de temps respectives entre le temps de référence et les temps respectifs auxquels chaque station de base de l'ensemble actif a reçu le signal de télémétrie.

4. Procédé selon la revendication 1, dans lequel la transmission du signal de contrôle de télémétrie comprend la transmission d'une pluralité de signaux de contrôle de télémétrie, chacun de la pluralité de signaux de contrôle de télémétrie associé à une station de base respective de l'ensemble actif et représentant la différence de temps respective entre le temps de référence et le temps respectif auquel la station de base de l'ensemble actif a reçu le signal de télémétrie.

5. Procédé selon la revendication 1, dans lequel l'ensemble actif inclut en outre la station de base ancre.

6. Appareil de station de base comprenant :
une première interface pour faciliter la communication radio avec une station mobile ;
une seconde interface pour faciliter la communication avec au moins une station de base voisine dans un ensemble actif en communication radio avec la station mobile ; et
un processeur en communication avec les première et seconde interfaces, le processeur configuré fonctionnellement pour :
amener la seconde interface à transmettre, à la au moins une station de base voisine dans l'ensemble actif, un signal de ressource de télémétrie identifiant un code de référence et un temps de référence associés à la station mobile ;
amener la première interface à transmettre, à la station mobile, un signal de commande de télémétrie dirigeant la station mobile pour qu'elle transmette un signal de télémétrie incluant le code de référence à chaque station de base dans l'ensemble actif à un temps en réponse au temps de référence, de sorte que chaque station de base dans l'ensemble actif reçoive le signal de télémétrie à un temps respectif ;
recevoir, à partir de la seconde interface, un signal de décalage respectif en provenance de chaque station de base voisine dans l'ensemble actif, chaque signal de décalage respectif identifiant une différence de temps respective entre le temps de référence et le temps respectif auquel la station de base voisine dans l'ensemble actif a reçu le signal de télémétrie ; et
amener la première interface à transmettre, à la station mobile, un signal de contrôle de télémétrie en réponse à chacun des signaux de décalage respectifs.

7. Appareil selon la revendication 6, dans lequel le processeur est en outre configuré fonctionnellement pour générer le code de référence à partir d'un code généré de manière pseudo-aléatoire.

8. Appareil selon la revendication 6, dans lequel le signal de contrôle de télémétrie représente une moyenne de chacune des différences de temps respectives entre le temps de référence et le temps respectif auquel chaque station de base dans l'ensemble actif a reçu le signal de télémétrie.

9. Appareil selon la revendication 6, dans lequel le signal de contrôle de télémétrie comprend une pluralité de signaux de contrôle de télémétrie, chacun de la pluralité de signaux de contrôle de télémétrie associé à une station respective de chaque station de base de l'ensemble actif, et représentant la différence de temps respective entre le temps de référence et le temps respectif auquel la station de base respective a reçu le signal de télémétrie.

10. Appareil selon la revendication 6, dans lequel l'ensemble actif inclut en outre l'appareil, et dans lequel le processeur est en outre configuré fonctionnellement pour :
recevoir, à partir de la première interface, le signal de télémétrie en provenance de la station mobile ;
calculer une différence de temps entre le temps de référence et un temps auquel l'appareil a reçu le signal de télémétrie en provenance de la station mobile ; et
amener la première interface à transmettre, à la station mobile, le signal de contrôle de télémétrie en réponse à la différence de temps entre le temps de référence et le temps auquel l'appareil a reçu le signal de télémétrie en provenance de la station mobile.
